# EUROPEAN PATENT APPLICATION

(11) **EP 4 675 336 A1**
(43) Date of publication of application: **07.01.2026**
(21) Application number: 24763661.6
(22) Date of filing: 16.02.2024
(51) Int. Cl.: G02B 27/02, G02B 26/10, H04N 5/64, H04N 13/344, H04N 13/383

(54) **IMAGE PROJECTION DEVICE AND METHOD FOR MANUFACTURING IMAGE PROJECTION DEVICE**

(30) Priority: 02.03.2023 JP 2023031750
(71) Applicant: QD Laser, Inc., Kanagawa 210-0855 (JP)
(72) Inventor: SUZUKI, Makoto, Kawasaki-shi, Kanagawa 210-0855 (JP)
(74) Representative: Becker Kurig & Partner Patentanwälte mbB
(86) International application number: PCT/JP2024/005594
(87) International publication number: WO 2024/181178

(57) **Abstract**

This image projection device (100) comprises: a projection unit (10) that includes a light source (11), a scanning unit (13) that causes a light beam emitted from the light source (11) to scan, and a projection optical system (20) that projects an image onto a retina (61) by causing a plurality of light beams, which are caused to scan by the scanning unit (13) and thereby emitted in different directions from the scanning unit (13), to converge at a convergence point (70) in an eye (60) of a user, and then projecting the converged light beams to the retina (61); an imaging unit (40) that captures an image of the eye (60) of the user; an identifying unit (34) that identifies the position of the pupil (62) in the captured image of the eye (60) of the user captured by the imaging unit (40); and a position control unit (32) that causes a component provided to the projection unit (10) that is capable of moving the position of the convergence point (70) to move and matches the position of the convergence point (70)to the pupil (62), on the basis of the position of the pupil (62) in the captured image identified by the identifying unit (34) and control information in which a plurality of points in an image captured by the imaging unit (40) and control values from when the convergence point (70) is positioned at the plurality of points are associated.

## Description

### Technical Field

The present invention relates to an image projection device and a method for manufacturing the image projection device.

### Related Art

An image projection device that uses light beams emitted from a light source to directly project an image onto a user's retina is known. In such an image projection device, a method called Maxwellian view is used. In Maxwellian view, an image is projected onto the retina by converging light beams forming the image within the user's eye and then projecting them onto the retina.

In an image projection device using Maxwellian view, in the case of a user moving the gaze direction, light beams may deviate from the user's pupil and the image may not be projected onto the retina. Thus, it has been proposed to detect the movement of the user's eye and control a movable mirror disposed on the optical path of the light beams according to the detected eye movement, so that even in the case of the user moving the gaze direction, the light beams enter the user's pupil and the image continues to be projected (for example, Patent Document 1). Further, in head mounted displays, it is known to detect the user's gaze direction and control so that a high-definition partial image is displayed at the user's gaze position (for example, Patent Document 2).

### Citation List

### Patent Document

Patent Document 1: Japanese Patent Application Laid-Open Publication No. 2009-122550.
Patent Document 2: Japanese Patent Application Laid-Open Publication No. H11-295647.

### SUMMARY OF INVENTION

### Technical Problem

In an image projection device using Maxwellian view, it is required to realize by a simple method that an image continues to be projected onto the retina even in the case of a user moving the gaze direction.

The present invention has been made in view of the above problem, and aims to enable an image to continue to be projected onto the retina even in the case of a user moving the gaze direction.

### Solution to Problem

The present invention is an image projection device that includes: a projection portion including: a light source; a scanning portion, scanning light beams emitted from the light source; and a projection optical system, converging a plurality of the light beams emitted from the scanning portion in different directions by being scanned by the scanning portion to a first convergence point inside a user's eye and then projecting the light beams onto a retina to project an image on the retina; an imaging portion, capturing an image of the user's eye; an identifying portion, identifying a position of a pupil in a captured image of the user's eye captured by the imaging portion; and a position control portion, moving a component provided in the projection portion capable of moving a position of the first convergence point based on a position of the pupil in the captured image identified by the identifying portion and control information that associates a plurality of points in an image captured by the imaging portion with control values for positioning the first convergence point at the plurality of points, and aligning a position of the first convergence point with the pupil.

In the above configuration, the position control portion may be configured to obtain the control value corresponding to a position of the pupil in the captured image from the control information and move the component using the control value obtained to align a position of the first convergence point with the pupil.

In the above configuration, the component may be configured to be a component that constitutes the projection optical system.

In the above configuration, the device may be configured to include a drive portion, moving the component, where the drive portion is a biaxial actuator, and the position control portion may be configured to move the component by controlling the drive portion using the control value.

In the above configuration, the device may be configured to include a memory portion that stores the control information.

In the above configuration, the projection optical system may be configured to include an emitting portion disposed in front of the user's eye and configured to converge the plurality of light beams at the first convergence point; a reflection portion configured to converge the plurality of light beams emitted from the scanning portion at a second convergence point in front of the emitting portion; and an optical member provided between the emitting portion and the reflection portion and configured to convert each of the plurality of light beams into focused light to focus light at a focusing point in front of the emitting portion and then cause the light to enter the emitting portion as diffused light, and the component may be the reflection portion.

In the above configuration, the position control portion, when the pupil moves from a direction facing forward with respect to a face of the user to another direction, may be configured to move the reflection portion so that incident positions of the plurality of light beams on the optical member move from a central portion of the optical member to a region on an opposite side to a direction corresponding to a direction in which the pupil moved with respect to a direction in which the plurality of light beams transmit through the optical member, thereby causing the plurality of light beams incident on the optical member to be refracted by the optical member toward a direction side corresponding to a direction in which the pupil moved.

In the above configuration, the position control portion, when the pupil moves from a direction facing forward with respect to a face of the user to another direction, may be configured to move the reflection portion so that at least a light beam corresponding to a center of the image among the plurality of light beams enters the pupil from an opposite side to a direction in which the pupil moved with reference to a direction in which the pupil faces after moving and projects onto a region of the retina on a direction side in which the pupil moved.

In the above configuration, the optical member may have image height characteristics such that a distance between the optical member and the focusing point for each of the plurality of light beams becomes substantially constant even when a region where the plurality of light beams are incident changes due to movement of the reflection portion.

In the above configuration, different control information may be stored for each different image projection device.

In the above configuration, the position control portion may be configured to move the reflection portion to swing around a swing center point at a position away from the reflection portion, and when the pupil moves from a direction facing forward with respect to a face of the user to another direction, the swing center point may be at a position where a position of the first convergence point is capable of being aligned with the pupil by making a swing amount of the reflection portion smaller than when the reflection portion is swung around a point on the reflection portion.

In the above configuration, the device may be configured to include a beam splitter, provided between the scanning portion and the reflection portion, where the scanning portion and the imaging portion may be positioned on opposite sides with respect to the beam splitter, the plurality of light beams emitted from the scanning portion in different directions may transmit through or may be reflected by the beam splitter and are incident on the reflection portion, and a reflected light reflected by the user's eye may be reflected or may transmit through the beam splitter and is incident on the imaging portion.

In the above configuration, the device may be configured to include an aperture member provided on a reflective surface of the reflection portion or between the reflection portion and the optical member, having an opening, where the opening allows the light beam and the reflected light to pass through, and having a property of allowing the light beam to transmit through and not allowing the reflected light to transmit through at portions other than the opening.

In the above configuration, the scanning portion and the first convergence point may be in a conjugate relationship, and the imaging portion and the first convergence point may be in a conjugate relationship.

The present invention is a method for manufacturing an image projection device, including: a step of preparing an image projection device having a projection portion and a imaging portion, the projection portion including: a light source; a scanning portion, scanning light beams emitted from the light source; and a projection optical system, converging a plurality of the light beams emitted from the scanning portion in different directions by being scanned by the scanning portion to a convergence point inside a user's eye and then projecting the light beams onto a retina to project an image on the retina, and the imaging portion capturing an image of the user's eye; a step of emitting the plurality of light beams from the image projection device, moving a component provided in the projection portion capable of moving the convergence point to move the convergence point to a plurality of positions, and capturing the plurality of light beams at the convergence point at each of the plurality of positions using the imaging portion; and a step of obtaining control information that associates a plurality of points in an image captured by the imaging portion with control values that controlled movement of the component when the convergence point is positioned at each of the plurality of points, from captured images in which the imaging portion captured the plurality of light beams at the convergence point.

In the above configuration, the capturing step may be configured to capture the plurality of light beams irradiated onto a screen disposed at a position of the convergence point.

In the above configuration, the method may be configured to include a step of storing the control information in a memory portion provided in the image projection device.

In the above configuration, different control information may be stored in the memory portion for each different image projection device.

### Effects of Invention

According to the present invention, an image may continue to be projected onto the retina even in the case of a user moving a gaze direction.

### BRIEF DESCRIPTION OF DRAWINGS

[FIG. 1] FIG. 1 is a diagram showing an image projection device according to Example 1.
[FIG. 2] FIG. 2 is a diagram mainly showing an optical system in the image projection device according to Example 1.
[FIG. 3] FIG. 3 is a diagram describing optical path lengths of multiple light beams emitted from the scanning portion.
[FIG. 4] FIG. 4 is a diagram showing an example of a captured image of a user's eye captured by the imaging portion.
[FIG. 5] FIG. 5(a) and FIG. 5(b) are diagrams showing changes in trajectories of light beams in response to the reflection mirror moving.
[FIG. 6] FIG. 6(a) to FIG. 6(c) are diagrams describing movement of the pupil and light beams projected onto the retina.
[FIG. 7] FIG. 7 is a flowchart showing a method for manufacturing the image projection device according to Example 1.
[FIG. 8] FIG. 8(a) to FIG. 8(c) are diagrams showing examples of imaging of light beams at the convergence point by the imaging portion.
[FIG. 9] FIG. 9 is an example of a captured image obtained by capturing light beams irradiated onto the screen.
[FIG. 10] FIG. 10 is a flowchart showing an example of a control method of the control portion in Example 1.
[FIG. 11] FIG. 11 is an enlarged view of the vicinity of the reflection mirror.
[FIG. 12] FIG. 12(a) to FIG. 12(c) are diagrams showing the offset amount of the swing center point, the tilt angle of the reflection mirror, and the tilt angle of the eye in Simulation 1.
[FIG. 13] FIG. 13 is a diagram showing the results of Simulation 1.
[FIG. 14] FIG. 14 is a diagram mainly showing an optical system in the image projection device according to Example 2.
[FIG. 15] FIG. 15 is a diagram showing the results of Simulation 2.
[FIG. 16] FIG. 16(a) and FIG. 16(b) are diagrams mainly showing an optical system in an image projection device according to Example 3.
[FIG. 17] FIG. 17(a) and FIG. 17(b) are diagrams showing the positional relationship between the scanning portion and imaging portion and the convergence point in the eye in Example 3.
[FIG. 18] FIG. 18(a) and FIG. 18(b) are diagrams mainly showing an optical system in an image projection device according to Example 4.
[FIG. 19] FIG. 19(a) and FIG. 19(b) are diagrams showing the positional relationship between the scanning portion and imaging portion and the convergence point in the eye in Example 4.
[FIG. 20] FIG. 20(a) and FIG. 20(b) are diagrams mainly showing an optical system in an image projection device according to Comparative Example 1 and Comparative Example 2.
[FIG. 21] FIG. 21(a) and FIG. 21(b) are diagrams showing the effect of the imaging portion and the convergence point in the eye being in a conjugate relationship.

### DESCRIPTION OF EMBODIMENTS

Hereinafter, examples of the present invention will be described with reference to the drawings.

### Example 1

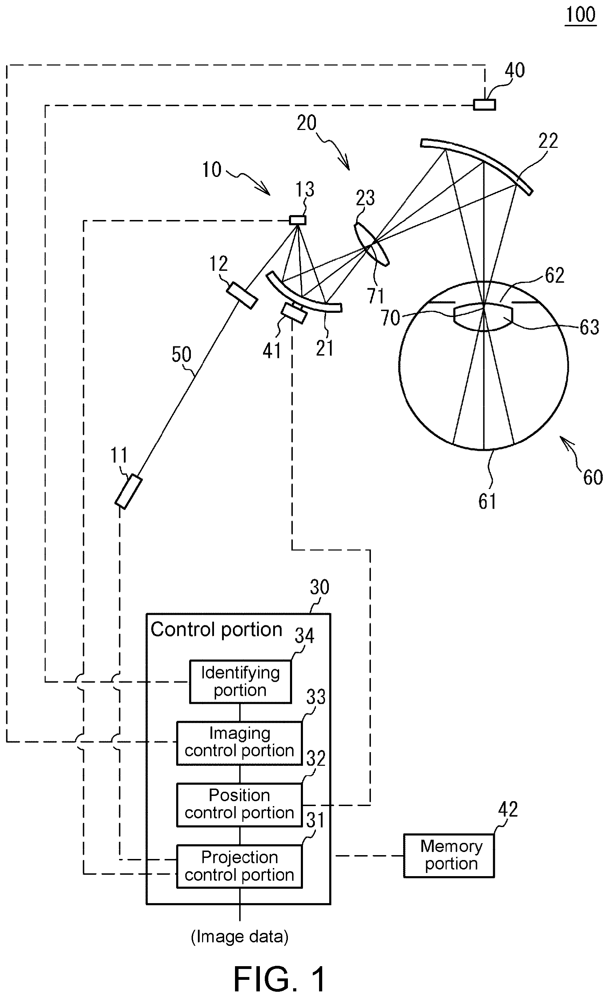

FIG. 1 is a diagram showing an image projection device according to Example 1. In FIG. 1, electrical connections are illustrated with broken lines. The image projection device according to Example 1 is a retinal projection type head mounted display utilizing Maxwell view, in which light beams (laser light) for allowing a user to visually recognize an image are directly projected onto the user's retina.

As shown in FIG. 1, the image projection device 100 according to Example 1 includes a projection portion 10, a control portion 30, an imaging portion 40, a drive portion 41, and a memory portion 42. The projection portion 10 includes a light source 11, a lens 12, a scanning portion 13, and a projection optical system 20. The projection optical system 20 includes a reflection mirror 21, a projection mirror 22, and a lens 23. The control portion 30 includes a projection control portion 31, a position control portion 32, an imaging control portion 33, and an identifying portion 34.

The light source 11 emits a light beam 50 (laser light) based on instructions from the projection control portion 31. The light source 11 emits, for example, a light beam 50 that is visible light of red laser light (wavelength: approximately 610nm to 660nm), green laser light (wavelength: approximately 515nm to 540nm), and blue laser light (wavelength: approximately 440nm to 480nm). Examples of the light source 11 that emits red, green, and blue laser light include a light source in which RGB (red, green, blue) laser diode chips and a three-color combining device are integrated. It is noted that the light source 11 may emit a light beam 50 of a single wavelength.

The projection control portion 31 receives image data from a camera and/or recording device, etc., not shown. The projection control portion 31 controls the emission of the light beam 50 from the light source 11 based on the input image data. The projection control portion 31 also controls the driving of the scanning portion 13. The scanning portion 13 scans the light beam 50 at high speed from the upper left to the lower right of the image (e.g., raster scan) based on instructions from the projection control portion 31. The projection control portion 31 controls the light source 11 and the scanning portion 13 to control the projection of the light beam 50 onto the user's retina 61. According to the case of installing this camera at an appropriate position facing the user's gaze direction, an image in the gaze direction captured by this camera may be projected onto the retina 61. It is also possible to project images input from recording devices, etc., or to superimpose camera images and images from recording devices, etc., to project so-called augmented reality (AR) images.

The light beam 50 emitted by the light source 11 transmits through the lens 12. The lens 12 is a focusing lens that converts the light beam 50 from diffused light to focused light. The light beam 50 that has transmitted through the lens 12 is incident on the scanning portion 13. The scanning portion 13 (scanner) scans the light beam 50 in two-dimensional directions of horizontal direction and vertical direction. In this Example 1, the scanning portion 13 is a MEMS (micro electric mechanical system) mirror. The scanning portion 13 may be other than a MEMS mirror, for example, potassium tantalate niobate (KTN), etc.

Multiple light beams 50 that are scanned in two-dimensional directions by the scanning portion 13 and emitted from the scanning portion 13 in different directions at different times are incident on the projection optical system 20. The projection optical system 20 converges the multiple light beams 50 emitted from the scanning portion 13 to a convergence point 70 inside the user's eye 60, and then projects the same onto the retina 61 to project an image on the retina 61. Specifically, the multiple light beams 50 emitted from the scanning portion 13 are incident on the reflection mirror 21. The reflection mirror 21 is a concave mirror having a reflective surface formed of a curved surface such as a free-form surface, and has positive focusing power. The multiple light beams 50 reflected by the reflection mirror 21 converge at a convergence point 71 in front of the projection mirror 22. A lens 23 is provided between the projection mirror 22 and the reflection mirror 21, for example, at the convergence point 71. The lens 23 is, for example, a biconvex lens. The multiple light beams 50 transmit through the lens 23 and are incident on the projection mirror 22. The projection mirror 22 is disposed in front of the user's eye 60. The projection mirror 22 reflects the multiple light beams 50 toward the user's eye 60. The projection mirror 22 is a concave mirror having a reflective surface formed of a curved surface such as a free-form surface, and has positive focusing power. The multiple light beams 50 reflected by the projection mirror 22 pass through the user's pupil 62, converge at the convergence point 70 at or near the crystalline lens 63, and then are projected onto the retina 61. Thereby, the user may visually recognize the image formed by the light beams 50. The projection mirror 22 may be a half mirror. In this case, the user may visually recognize an external image in a see-through manner.

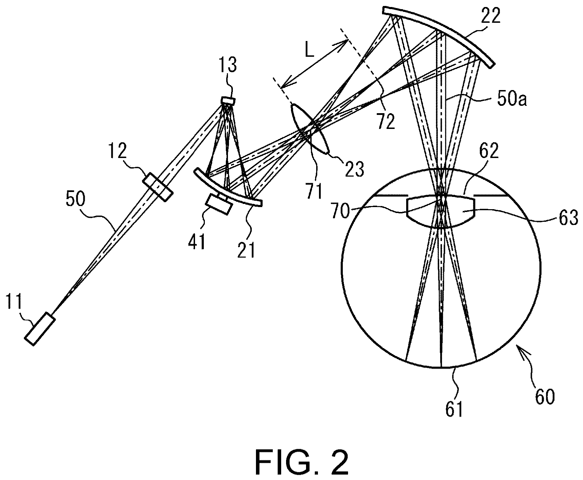

Here, the process from when the light beam 50 emitted from the light source 11 is projected onto the retina 61 will be described. FIG. 2 is a diagram mainly showing an optical system in the image projection device according to Example 1. As shown in FIG. 2, the light beam 50 emitted by the light source 11 transmits through the lens 12. The lens 12 is a focusing lens that converts the light beam 50 from diffused light to focused light. The light beam 50 that has transmitted through the lens 12 is incident on the scanning portion 13 in a state of focused light. The lens 12 is provided between the light source 11 and the scanning portion 13 to make the light beam 50 reflected by the reflection mirror 21 into substantially parallel light.

Multiple light beams 50 that are scanned in two-dimensional directions by the scanning portion 13 and emitted from the scanning portion 13 in different directions at different times are incident on the reflection mirror 21. Each of the multiple light beams 50 focuses in front of the reflection mirror 21, then becomes diffused light and is incident on the reflection mirror 21. Since the reflection mirror 21 has positive focusing power, each of the multiple light beams 50 is converted from diffused light to substantially parallel light by being reflected by the reflection mirror 21.

The multiple light beams 50 reflected by the reflection mirror 21 converge at a convergence point 71 in front of the projection mirror 22. A lens 23 is provided at the convergence point 71. The lens 23 is a focusing lens that converts each of the multiple light beams 50 from substantially parallel light to focused light. The lens 23 is provided at the convergence point 71 to make each of the multiple light beams 50 reflected by the projection mirror 22 into substantially parallel light. Each of the multiple light beams 50 that has transmitted through the lens 23 focuses at a focusing point 72 in front of the projection mirror 22, then becomes diffused light and is incident on the projection mirror 22.

Since the projection mirror 22 has positive focusing power, each of the multiple light beams 50 is converted from diffused light to substantially parallel light by being reflected by the projection mirror 22. The multiple light beams 50 converge at a convergence point 70 within the user's eye 60. The convergence point 70 is positioned, for example, at the crystalline lens 63 or in the vicinity of the crystalline lens 63. The light beam 50 is converted from substantially parallel light to focused light by the crystalline lens 63 and focuses in the vicinity of the retina 61. This allows the user to visually recognize the image.

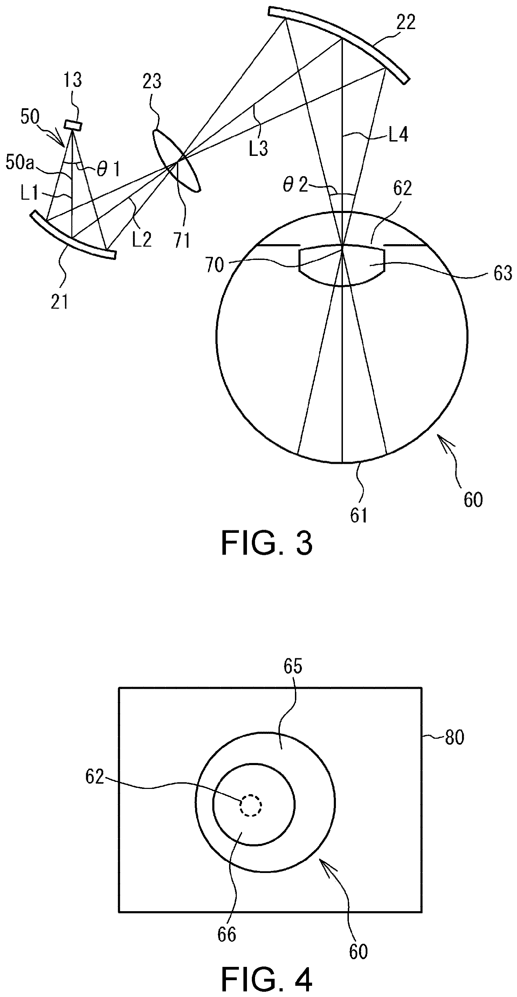

FIG. 3 is a diagram describing optical path lengths of multiple light beams emitted from the scanning portion 13. Here, the optical path length of a light beam 50a corresponding to the center of an image projected on the retina 61 will be described as an example. As shown in FIG. 3, the optical path length L1 of the light beam 50a between the scanning portion 13 and the reflection mirror 21 and the optical path length L4 of the light beam 50a between the projection mirror 22 and the convergence point 70 are different. The optical path length L2 of the light beam 50a between the reflection mirror 21 and the convergence point 71 and the optical path length L3 of the light beam 50a between the convergence point 71 and the projection mirror 22 are different. On the other hand, the ratio of the optical path length L2 to the optical path length L1 (L2/L1) and the ratio of the optical path length L3 to the optical path length L4 (L3/L4) are the same. Thus, the layout forms similar shapes with equal magnification, and the scanning angle θ1 of the light beam 50 by the scanning portion 13 and the convergence angle θ2 at which the multiple light beams 50 converge at the convergence point 70 are the same. The similarity ratio may be determined by the distance between the projection mirror 22 and the user's eye 60, the shape of the user's face, and/or the space on the side of the user's face.

As shown in FIG. 1, the imaging portion 40 is disposed in front of the user's eye 60 and captures an image of the user's eye 60 based on instructions from the imaging control portion 33. The imaging portion 40 is, for example, an infrared camera that irradiates infrared light to the eye 60 and captures an image of the eye 60. Considering that the user visually recognizes an external image in a see-through manner, the imaging portion 40 may be disposed at a position slightly shifted from the front of the eye 60 within a range where the eye 60 may be imaged. For example, in the case of the projection optical system 20 being mounted on a glasses-type frame, the imaging portion 40 may be provided in the vicinity of a temple of the glasses-type frame or in the vicinity of a nose pad. FIG. 4 is a diagram showing an example of a captured image of a user's eye 60 captured by the imaging portion 40. As shown in FIG. 4, in the captured image 80 of the eye 60 captured by the imaging portion 40, at least the sclera 65 (sclerotic coat) and the iris 66 (cornea) may be recognized.

As shown in FIG. 1, the identifying portion 34 obtains the captured image 80 of the eye 60 captured by the imaging portion 40 from the imaging portion 40 and identifies the position of the pupil 62 in the captured image 80. For example, as shown in FIG. 4, the identifying portion 34 identifies the range of the iris 66 by performing image analysis on the captured image 80 and identifies the center portion of the iris 66 as the position of the pupil 62.

The drive portion 41 is, for example, a biaxial actuator and moves the reflection mirror 21 based on instructions from the position control portion 32. The reflection mirror 21 is a concave mirror as described above. In the case of the reflection mirror 21 having a vertex of a concave curved surface at a substantially central portion, the reflection mirror 21 moves to swing around the vicinity of the vertex. Among the multiple light beams 50, the light beam 50a corresponding to the substantially center of the image projected on the retina 61 is incident on the swing center of the reflection mirror 21.

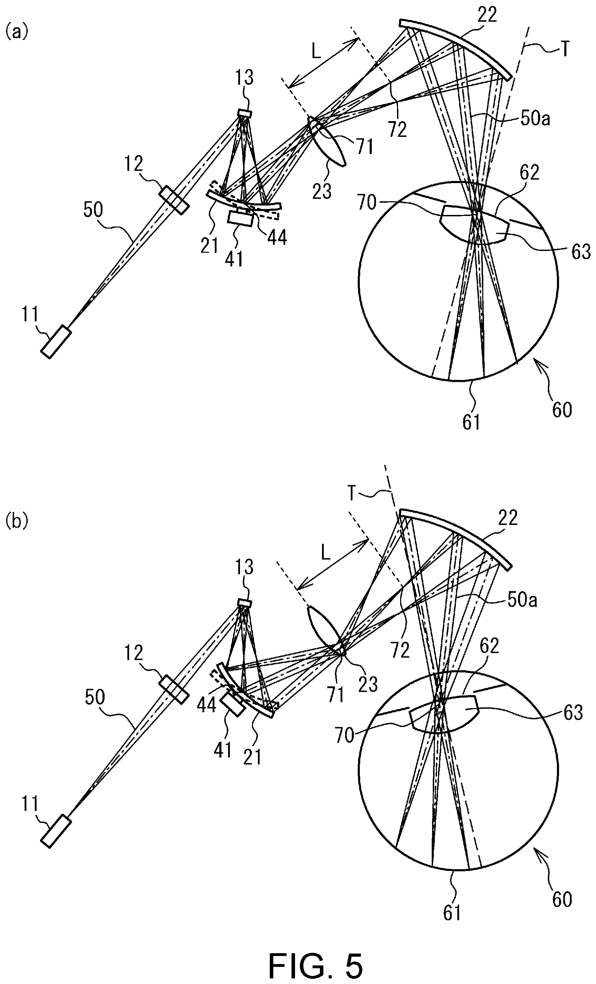

FIG. 5(a) and FIG. 5(b) are diagrams showing changes in trajectories of light beams 50 in response to the reflection mirror 21 moving. In FIG. 5(a) and FIG. 5(b), the reflection mirror 21 in the case of FIG. 2 is illustrated with dotted lines. FIG. 2 illustrates a case where the light beam 50a corresponding to the substantially center of the image projected on the retina 61 is incident on the eye 60 from substantially the front.

As shown in FIG. 2, in the case of the light beam 50a corresponding to the substantially center of the image projected on the retina 61 being incident on the eye 60 from substantially the front, the convergence point 71 where the multiple light beams 50 reflected by the reflection mirror 21 converge is in the vicinity of the center of the lens 23.

As shown in FIG. 5(a), in the case of the user attempting to see the right side of the image and directing the gaze toward the right direction, the pupil 62 is in a state of having moved in the right direction relative to the user's face. At this time, the drive portion 41 moves the reflection mirror 21 based on instructions from the position control portion 32, so that the multiple light beams 50 transmit through a left side region of the lens 23 with respect to the traveling direction of the light beams 50. That is, the convergence point 71 where the multiple light beams 50 converge is positioned in the left side region of the lens 23 with respect to the traveling direction of the light beams 50. For example, the drive portion 41 moves the reflection mirror 21 counterclockwise around the swing center point 44 near the vertex of the concave curved surface of the reflection mirror 21 which is a concave mirror. The projection control portion 31 controls the light source 11 and the scanning portion 13 so that the light beam 50a corresponding to the center of the image projected on the retina 61 is incident near the swing center point 44. The multiple light beams 50 transmit through the left side region of the lens 23 with respect to the traveling direction of the light beams 50, thereby being refracted toward the right side in the traveling direction by the lens 23, and thereafter being incident on the projection mirror 22. The multiple light beams 50 are refracted toward the right side in the traveling direction by the lens 23, so that the position and incident angle at which the multiple light beams 50 are incident on the projection mirror 22 change from the state of FIG. 2. As a result, the position of the convergence point 70 of the multiple light beams 50 moves to the right side, and even in the case of the pupil 62 moving in the right direction, the multiple light beams 50 become incident on the pupil 62.

Further, at least the light beam 50a among the multiple light beams 50 is incident on the pupil 62 from the left side opposite to the direction (right direction) in which the pupil 62 moved, with reference to the direction T (i.e., the gaze direction) that the pupil 62 faces after the pupil 62 moved, and is projected onto the right side region of the retina 61, which is the direction in which the pupil 62 moved. The point at which the light beam 50a is incident on the reflection mirror 21 substantially coincides with, for example, the swing center point 44 of the reflection mirror 21 (e.g., the vertex of the free-form surface).

As shown in FIG. 5(b), in the case of the user directing the gaze in the left direction to see the left side of the image, the pupil 62 is in a state of having moved to the left direction relative to the user's face. At this time, the drive portion 41 moves the reflection mirror 21 based on instructions from the position control portion 32, so that the multiple light beams 50 transmit through the right side region of the lens 23 with respect to the traveling direction of the light beams 50. That is, the convergence point 71 where the multiple light beams 50 converge is positioned in the right side region of the lens 23 with respect to the traveling direction of the light beams 50. For example, the drive portion 41 moves the reflection mirror 21 clockwise around the swing center point 44 of the reflection mirror 21. The projection control portion 31 controls the light source 11 and the scanning portion 13 so that the light beam 50a is incident in the vicinity of the swing center point 44. The multiple light beams 50 transmit through the right side region of the lens 23 with respect to the traveling direction of the light beams 50, are refracted leftward in the traveling direction by the lens 23, and then are incident on the projection mirror 22. The multiple light beams 50 are refracted leftward in the traveling direction by the lens 23, so that the position and incident angle at which the light beams 50 are incident on the projection mirror 22 change from the state in FIG. 2. As a result, the position of the convergence point 70 of the multiple light beams 50 moves to the left side, and even in the case of the pupil 62 moving in the left direction, the multiple light beams 50 are incident on the pupil 62.

Further, at least the light beam 50a among the multiple light beams 50 is incident on the pupil 62 from the right side opposite to the direction (left direction) in which the pupil 62 moved, with reference to the direction T (i.e., the gaze direction) that the pupil 62 faces after the pupil 62 moved, and is projected onto the left side region of the retina 61, which is the direction in which the pupil 62 moved. The point at which the light beam 50a is incident on the reflection mirror 21 substantially coincides with, for example, the swing center point 44 of the reflection mirror 21 (e.g., the vertex of the free-form surface).

As shown in FIG. 5(a) and FIG. 5(b), even in the case of the reflection mirror 21 moving to swing, the distance L between the lens 23 and the focusing point 72 of the light beam 50a is made to remain substantially unchanged from the distance L in FIG. 2. This is because in the case of the position of the focusing point 72 changing due to the swinging of the reflection mirror 21 that follows the movement of the pupil 62, since the light beam 50a after the focusing point 72 is diffused light, the spot diameter differs according to reflection at the projection mirror 22, and as a result, the spot diameter of the light beam 50a projected onto the retina 61 differs, resulting in an out-of-focus state depending on the viewing position. In this way, making the distance L between the lens 23 and the focusing point 72 unchanged even in the case of the positions where the multiple light beams 50 are incident on the lens 23 changing may be realized by using the lens 23 having image height characteristics within a range applicable to this. Further, the lens 23 needs to have an effective diameter sufficient to cover the projection range of the light beam 50 due to the swinging of the reflection mirror 21. Further, even in the case of the reflection mirror 21 moving to swing, the ratio (L2/L1) of the optical path length L2 of the light beam 50a between the reflection mirror 21 and the convergence point 71 to the optical path length L1 of the light beam 50a between the scanning portion 13 and the reflection mirror 21, and the ratio (L3/L4) of the optical path length L3 of the light beam 50a between the convergence point 71 and the projection mirror 22 to the optical path length L4 of the light beam 50a between the projection mirror 22 and the convergence point 70, are substantially the same magnitude (L1 to L4 refer to FIG. 3). Further, even in the case of the reflection mirror 21 moving to swing, the convergence angle θ2 (refer to FIG. 3) at which the multiple light beams 50 converge at the convergence point 70 hardly changes.

It is noted that in FIG. 5(a) and FIG. 5(b), the case of the pupil 62 moving in the left-right direction (i.e., the case of the eye 60 rotating in the left-right direction) is shown as an example, but the same applies to the case of the pupil 62 moving in other directions such as the up-down direction. Further, at least the light beam 50a among the multiple light beams 50 is incident on the pupil 62 from the opposite side to the direction in which the pupil 62 moved with reference to the direction T that the pupil 62 faces, and is projected onto the region of the retina 61 on the direction side in which the pupil 62 moved.

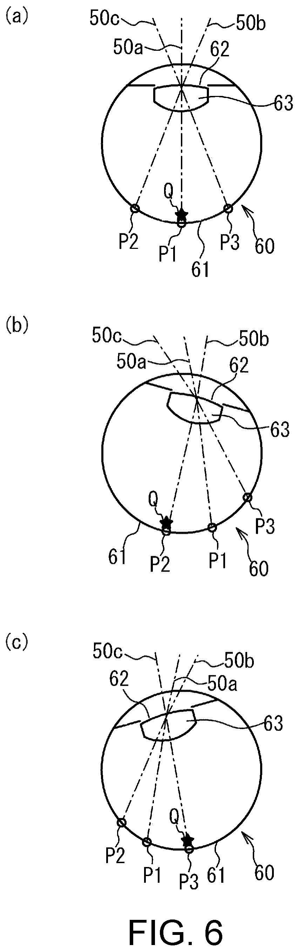

FIG. 6(a) to FIG. 6(c) are diagrams describing movement of the pupil 62 and light beams 50 projected onto the retina 61. As shown in FIG. 6(a), in the case of the pupil 62 facing forward with respect to the user's face, the light beam 50a among the multiple light beams 50a, 50b, and 50c is incident from substantially the front of the pupil 62. The light beams 50a, 50b, and 50c pass through substantially the center of the pupil 62 and are projected onto the retina 61. At position Q on the retina 61, the light beam 50a corresponding to pixel P1 at the center of the image projected onto the retina 61 is projected. The light beam 50b corresponding to pixel P2 is projected to the left side of position Q, and the light beam 50c corresponding to pixel P3 is projected to the right side of position Q. It is noted that the image visually recognized by the user becomes an inverted image of the image projected onto the retina 61. Thus, the user visually recognizes an image in which pixel P1 is positioned at the center, pixel P2 is positioned on the right side, and pixel P3 is positioned on the left side. In this way, the coordinate system visually recognized by the user corresponds to the coordinate system in which the user views the projection mirror 22.

As shown in FIG. 6(b), in the case of the user moving the pupil 62 to the right direction with respect to the user's face in an attempt to see pixel P2 of the image projected onto the retina 61, by moving the reflection mirror 21 as described above, at least the light beams 50a and 50c are incident on the pupil 62 from the left side opposite to the direction that the pupil 62 faces. Even in this case, the light beams 50a, 50b, and 50c pass through substantially the center of the pupil 62. The light beams 50a and 50c are projected onto the right region of the retina 61. At position Q on the retina 61, the light beam 50b corresponding to pixel P2 of the image projected onto the retina 61 is projected. Thus, the position of the user's gaze with respect to the image projected onto the retina 61 becomes pixel P2, and the user may see an image in which the desired pixel P2 is positioned at the center.

As shown in FIG. 6(c), in the case of the user moving the pupil 62 to the left direction with respect to the user's face in an attempt to see pixel P3 of the image projected onto the retina 61, by moving the reflection mirror 21 as described above, at least the light beams 50a and 50b are incident on the pupil 62 from the right side opposite to the direction that the pupil 62 faces. Even in this case, the light beams 50a, 50b, and 50c pass through substantially the center of the pupil 62. The light beams 50a and 50b are projected onto the left region of the retina 61. At position Q on the retina 61, the light beam 50c corresponding to pixel P3 of the image projected onto the retina 61 is projected. Thus, the position of the user's gaze with respect to the image projected onto the retina 61 becomes pixel P3, and the user may see an image in which the desired pixel P3 is positioned at the center.

As shown in FIG. 2, FIG. 5(a), and FIG. 5(b), by moving the reflection mirror 21, the position of the convergence point 70 where the multiple light beams 50 converge moves. Accordingly, even in the case of the user changing the gaze direction, the multiple light beams 50 become incident on the pupil 62. From this, by identifying the position of the pupil 62 and moving the reflection mirror 21 so that the convergence point 70 is positioned at the identified position of the pupil 62, the multiple light beams 50 may continue to be incident on the pupil 62. To realize this, control information that associates multiple points in an image captured by the imaging portion 40 with control values for driving the drive portion 41 to position the convergence point 70 at these multiple points is obtained in advance. Then, the position of the pupil 62 in the captured image 80 of the user's eye 60 captured by the imaging portion 40 is identified, and the drive portion 41 is controlled based on the identified position of the pupil 62 and the control information to move the reflection mirror 21. Accordingly, the convergence point 70 may be positioned at the pupil 62. The control information is stored in advance in, for example, the memory portion 42.

Table 1 is an example of control information stored in the memory portion 42. Table 1 is an example in the case of the image projected onto the retina 61 having a horizontal field of view of 28° and a vertical field of view of 14°. As shown in Table 1, the control information associates multiple points in an image captured by the imaging portion 40 with current values (control values) for positioning the convergence point 70 at these multiple points. Here, the multiple points are defined by horizontal direction angles and vertical direction angles. Since the drive portion 41 that moves the reflection mirror 21 is, for example, a biaxial actuator, in the case of the normal direction at the vertex of the concave curved surface of the reflection mirror 21 being the roll axis, the horizontal direction of the reflection mirror 21 being the pitch axis, and the vertical direction being the yaw axis, the current value for yaw rotation (left numerical value in Table 1) and the current value for pitch rotation (right numerical value in Table 1) are described. For example, to position the convergence point 70 at a point defined by horizontal direction angle and vertical direction angle of (10.5°, 3.5°), the drive portion 41 should be driven with current values of (36.44mA, 9.75mA) to move the reflection mirror 21.

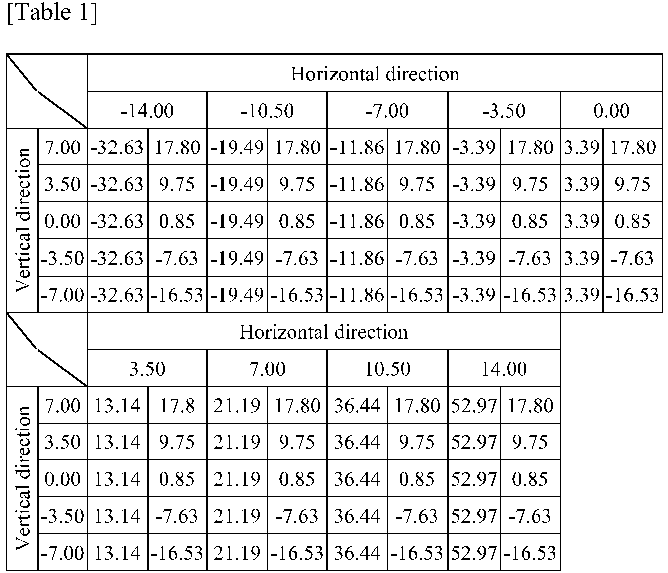

It is noted that the control information stored in the memory portion 42 may be other than the table shown in Table 1, as long as it is information that associates multiple points in an image captured by the imaging portion 40 with control values for moving the convergence point 70 to the multiple points. For example, approximation equations such as linear functions or quadratic functions may be stored in the memory portion 42 as control information.

As shown in FIG. 1, the position control portion 32 controls the drive portion 41 based on the position of the pupil 62 in the captured image 80 identified by the identifying portion 34 and the control information stored in the memory portion 42 to move the reflection mirror 21, so that the convergence point 70 is positioned at the pupil 62. For example, in the case of the position of the pupil 62 in the captured image 80 identified by the identifying portion 34 being a point defined as (-7.00°, -3.50°) by horizontal direction angle and vertical direction angle, the position control portion 32 refers to Table 1 and drives the drive portion 41 with current values of (-11.86mA, -7.63mA) to move the reflection mirror 21. Thereby, the multiple light beams 50 may be passed through the pupil 62, and an image may be projected onto the retina 61.

The control portion 30 is a processor such as a CPU (central processing unit). The projection control portion 31, the position control portion 32, the imaging control portion 33, and the identifying portion 34 may function by the same processor, or may function by different processors. The memory portion 42 is a non-volatile semiconductor memory such as flash memory.

### [Manufacturing Method]

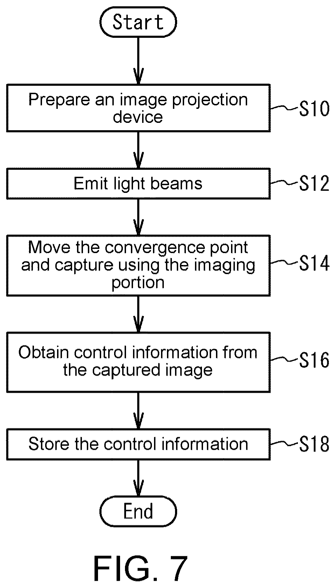

FIG. 7 is a flowchart showing a method for manufacturing the image projection device according to Example 1. As shown in FIG. 7, an image projection device 100 is prepared (step S10). The image projection device 100 includes, as shown in FIG. 1, a projection portion 10 including a light source 11, a scanning portion 13, and a projection optical system 20, an imaging portion 40, and a drive portion 41. Next, the light source 11 is driven to emit light beams 50 from the image projection device 100 to the outside (step S12). The light beams 50 emitted from the image projection device 100 converge at a convergence point 70, as shown in FIG. 2.

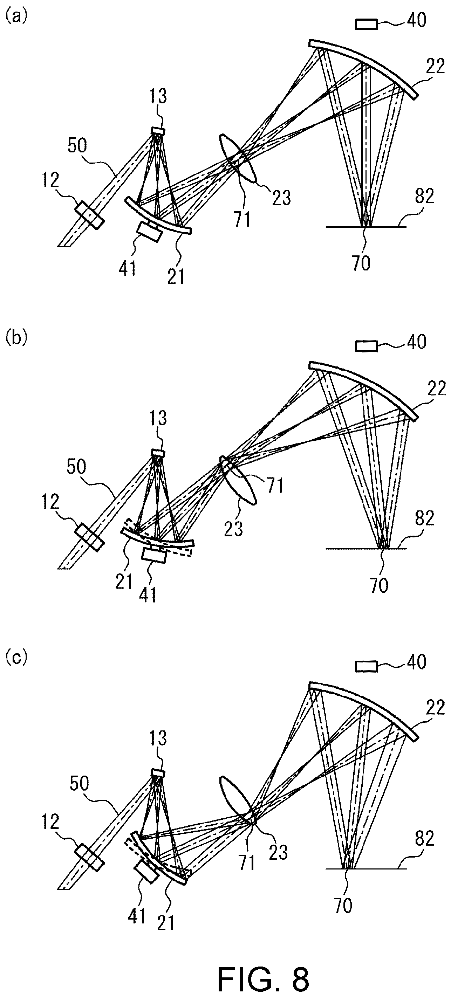

Next, the drive portion 41 is controlled to move the reflection mirror 21, the convergence point 70 is moved to multiple positions, and the light beams 50 at the convergence point 70 are captured by the imaging portion 40 (step S14). FIG. 8(a) to FIG. 8(c) are diagrams showing examples of imaging of light beams 50 at the convergence point 70 by the imaging portion 40. In FIG. 8(a) to FIG. 8(c), the positions of the convergence point 70 are different because the drive portion 41 moved the reflection mirror 21. As shown in FIG. 8(a) to FIG. 8(c), a screen 82 is disposed at the position of the convergence point 70, and the light beams 50 irradiated onto the screen 82 are captured by the imaging portion 40. Even in the case of moving the position of the convergence point 70, the screen 82 is not moved. Even in the case of moving the reflection mirror 21 to move the position of the convergence point 70, the position of the convergence point 70 in the traveling direction of the light beams 50 hardly changes.

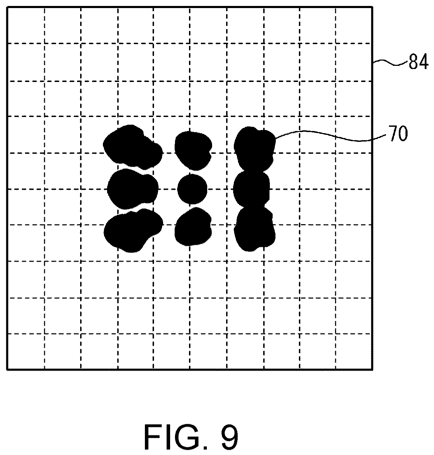

FIG. 9 is an example of a captured image 84 obtained by capturing light beams 50 irradiated onto the screen 82. FIG. 9 collectively shows a case in which the reflection mirror 21 is swung by ±4° in the horizontal direction and ±3° in the vertical direction, and the convergence point 70 is at nine different positions. As shown in FIG. 9, it may be understood that the position of the convergence point 70 captured by the imaging portion 40 differs by moving the reflection mirror 21. In the case of swinging the reflection mirror 21, the shape of the convergence point 70 (i.e., the convergence shape of the multiple light beams 50) becomes slightly larger, but one scale in the figure is 1 mm, and the diameter of the pupil 62 is generally 3 mm to 7 mm, so it is sufficiently small relative to the pupil 62.

As shown in FIG. 7, from the captured image 84 captured in step S14, control information (e.g., Table 1 described above) is obtained that associates multiple points in the image captured by the imaging portion 40 with control values (e.g., current values) for controlling the drive portion 41 to move the reflection mirror 21 in the case of the convergence point 70 being positioned at each of the multiple points (step S16). As shown in FIG. 2, since the convergence point 70 is positioned in the vicinity of the pupil 62, by obtaining control information such as Table 1 from the captured image 84 obtained by moving the convergence point 70 to multiple positions and capturing the light beams 50 at the convergence point 70 with the imaging portion 40 as in steps S14 and S16, the convergence point 70 may be aligned with the position of the pupil 62 using the position of the pupil 62 in the captured image 80 of the eye 60 captured by the imaging portion 40 and this control information.

Next, the control information obtained in step S16 is stored in the memory portion 42 (step S18). This control information may also be configured to be individually obtained and stored for each manufactured device according to the case of manufacturing the image projection device 100. According to the case of manufacturing the image projection device 100, in the case of installing the reflection mirror 21, the projection mirror 22, and the like, there is a possibility that the installation position and direction cannot necessarily be installed at completely identical positions for each device. In that case, the light beams 50 are slightly displaced from the center of the pupil 62. By adopting a configuration in which control information is individually obtained and stored for each device, it is possible to absorb differences in the installation state of component parts used in manufacturing for each device and achieve uniform performance between devices.

### [Control Method]

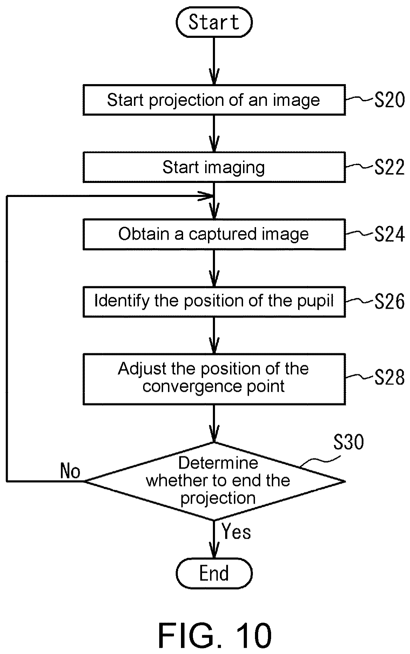

FIG. 10 is a flowchart showing an example of a control method of the control portion 30 in Example 1. As shown in FIG. 10, in response to image data being input, the projection control portion 31 controls the light source 11 and the scanning portion 13 to start projection of an image onto the retina 61 of the user (step S20). In accordance with the start of image projection, the imaging control portion 33 controls the imaging portion 40 to start imaging of the eye 60 of the user (step S22). It is noted that the imaging control portion 33 may control the imaging portion 40 to start imaging in response to an instruction from the user.

Next, the identifying portion 34 obtains a captured image of the user's eye 60 from the imaging portion 40 (step S24). For example, a captured image 80 as shown in FIG. 4 is obtained. Next, the identifying portion 34 identifies the position of the pupil 62 in the obtained captured image 80 (step S26). For example, as shown in FIG. 4, the identifying portion 34 performs image analysis on the obtained captured image 80 to identify the range of the iris 66, and identifies the center portion of the iris 66 as the position of the pupil 62.

Next, the position control portion 32 controls the drive portion 41 based on the position of the pupil 62 in the captured image 80 identified in step S26 and the control information stored in the memory portion 42 to move the reflection mirror 21, and adjusts so that the convergence point 70 is positioned at the pupil 62 (step S28). For example, in the case of the control information shown in Table 1 being stored in the memory portion 42, the position control portion 32 identifies a current value (control value) corresponding to the position of the pupil 62 in the captured image 80, and drives the drive portion 41 with the identified current value to move the reflection mirror 21. Thereby, even in the case of the user changing the gaze direction, multiple light beams 50 may continue to be incident on the pupil 62, and an image may continue to be projected onto the retina 61. It is noted that in the case of the reflection mirror 21 being a concave mirror and having a vertex of the concave curved surface at its substantially central portion, the reflection mirror 21 is moved to swing around the vicinity of that vertex. The projection control portion 31 controls the light source 11 and the scanning portion 13 so that the light beam 50a corresponding to the substantially center of the image projected onto the retina 61 is incident on the vicinity of the swing center of the reflection mirror 21.

Next, the projection control portion 31 determines whether or not to continue projecting an image onto the retina 61 (step S30). In the case of continuing to project an image (step S30: No), the process returns to step S24. On the other hand, in the case of ending image projection (step S30: Yes), this process ends.

As described above, according to Example 1, the identifying portion 34 identifies the position of the pupil 62 in the captured image 80 of the user's eye 60 captured by the imaging portion 40, as shown in FIG. 4. The memory portion 42 stores control information that associates multiple points in an image captured by the imaging portion 40 with control values (e.g., current values) for positioning the convergence point 70 at the multiple points, as shown in Table 1. The position control portion 32 moves the reflection mirror 21 based on the position of the pupil 62 identified by the identifying portion 34 and the control information stored in the memory portion 42, and aligns the position of the convergence point 70 with the pupil 62. Thereby, by a simple method using the captured image 80 of the eye 60 captured by the imaging portion 40, even in the case of the user changing the gaze direction, multiple light beams 50 may continue to be incident on the pupil 62 to continue projecting an image onto the retina 61.

Further, in Example 1, the position control portion 32 obtains a control value corresponding to the position of the pupil 62 in the captured image 80 from the control information stored in the memory portion 42, and moves the reflection mirror 21 using the obtained control value to align the position of the convergence point 70 with the pupil 62. Thereby, even in the case of the user changing the gaze direction, continuing to make multiple light beams 50 incident on the pupil 62 may be easily realized. Further, by storing control information for each device during manufacturing, installation errors of component parts for each device may be absorbed, and making multiple light beams 50 incident on the pupil 62 may be easily realized in any device.

It is noted that in Example 1, the case where the control information shown in Table 1 is stored in the memory portion 42 was shown as an example, but it may be stored in an external device other than the image projection device 100. In this case, the position control portion 32 obtains the control information from the external device.

Further, in Example 1, a component part (reflection mirror 21) constituting the projection optical system 20 is moved to move the position of the convergence point 70. Thereby, for example, compared to the case of moving the position of the convergence point 70 by moving the scanning portion 13, the position of the convergence point 70 may be moved while suppressing the influence on the light beam 50. It is noted that as long as it is possible to move the position of the convergence point 70, component parts other than the component parts constituting the projection optical system 20 among the component parts of the projection portion 10 may be moved.

Further, in Example 1, the drive portion 41 that moves the reflection mirror 21 is included. The drive portion 41 is a biaxial actuator. The position control portion 32 moves the reflection mirror 21 by controlling the drive portion 41 using the control values described in the control information. Thereby, the position of the convergence point 70 may be easily moved in a two-dimensional direction.

Further, in Example 1, the projection optical system 20 includes a projection mirror 22 (emitting portion) that converges multiple light beams 50 to the convergence point 70, a reflection mirror 21 (reflection portion) that converges multiple light beams 50 to a convergence point 71 in front of the projection mirror 22, and a lens 23 (optical member) that converts each of the multiple light beams 50 into focused light, focuses the light at a focusing point 72 in front of the projection mirror 22, and then makes the light incident on the projection mirror 22 as diffused light. Then, the reflection mirror 21 is moved to move the position of the convergence point 70. Thereby, the position of the convergence point 70 may be moved while suppressing the influence on the light beam 50.

Further, in Example 1, as shown in FIG. 5(a) and FIG. 5(b), in the case of the pupil 62 moving from the front to another direction, the position control portion 32 controls the drive portion 41 to move the reflection mirror 21 so as to move the incident positions of the multiple light beams 50 on the lens 23 from the central portion of the lens 23 to a region on the opposite side to the direction corresponding to the direction in which the pupil 62 moved with respect to the direction in which the multiple light beams 50 transmit through the lens 23. The lens 23 refracts the multiple light beams 50 incident on the lens 23 toward the direction side corresponding to the direction in which the pupil 62 moved. Thereby, even in the case of the pupil 62 moving, the multiple light beams 50 may be made incident on the pupil 62.

Further, in Example 1, as shown in FIG. 5(a) and FIG. 5(b), in the case of the pupil 62 moving from the front to another direction, the position control portion 32 controls the drive portion 41 to move the reflection mirror 21 so as to make at least a light beam 50a corresponding to the center of an image projected on the retina 61 among the multiple light beams 50 incident on the pupil 62 from the opposite side to the direction in which the pupil 62 moved with reference to the direction T in which the pupil 62 after moving is facing, and project the light beam on a region on the direction side in which the pupil 62 moved in the retina 61. Thereby, as described in FIG. 6(b) and FIG. 6(c), the user may visually recognize an image centered on a portion that the user tried to see by moving the gaze in the image projected on the retina 61.

Further, in Example 1, as shown in FIG. 2, FIG. 5(a), and FIG. 5(b), the distance L between the lens 23 and the focusing point 72 of the light beam 50 is constant even in the case of the reflection mirror 21 moving. Thereby, even in the case of the multiple light beams 50 being obliquely incident on the lens 23, the multiple light beams 50 may be focused in the vicinity of the retina 61. The term "constant" means substantially constant to the extent that the multiple light beams 50 are focused in the vicinity of the retina 61, and refers to the case of the difference between the distance L before the reflection mirror 21 moves and the distance L after the reflection mirror 21 moves being ±5% or less with respect to the distance L before the reflection mirror 21 moves.

Further, in Example 1, the light beam 50 has a ratio (L2/L1) of the optical path length L2 between the reflection mirror 21 and the convergence point 71 to the optical path length L1 between the scanning portion 13 and the reflection mirror 21, and a ratio (L3/L4) of the optical path length L3 between the convergence point 71 and the projection mirror 22 to the optical path length L4 between the projection mirror 22 and the convergence point 70, which are the same magnitude even in the case of the reflection mirror 21 moving. Thereby, even in the case of the reflection mirror 21 moving, the optical influence that the projection mirror 22 gives to the light beam 50 may be reduced by the reflection mirror 21. The term "same magnitude" means substantially the same magnitude to the extent that the optical influence by the projection mirror 22 may be reduced by the reflection mirror 21, and refers to the case of the difference between the ratio (L2/L1) of the optical path length L2 to the optical path length L1 and the ratio (L3/L4) of the optical path length L3 to the optical path length L4 being ±5% or less with respect to the average value of the ratio (L2/L1) of the optical path length L2 to the optical path length L1 and the ratio (L3/L4) of the optical path length L3 to the optical path length L4.

Further, in Example 1, the convergence angle θ2 at which the multiple light beams 50 converge at the convergence point 70 is constant even in the case of the reflection mirror 21 moving. Thereby, even in the case of the reflection mirror 21 moving, an image with the same degree of field of view may be projected onto the retina 61. The term "constant" means substantially constant to the extent that the field of view of the image projected onto the retina 61 is substantially the same, and refers to the case of the difference between the convergence angle 02 before the reflection mirror 21 moves and the convergence angle θ2 after the reflection mirror 21 moves being ±10% or less with respect to the convergence angle θ2 before the reflection mirror 21 moves.

Further, in Example 1, as shown in FIG. 5(a) and FIG. 5(b), the drive portion 41 moves the reflection mirror 21 so as to swing around the swing center point 44 in the vicinity of the central portion of the reflection mirror 21. The projection control portion 31 projects the light beam 50a corresponding to the substantially center of the image projected onto the retina 61 among the multiple light beams 50 to the swing center point 44. Thereby, even in the case of the pupil 62 moving, causing the multiple light beams 50 to be incident on the pupil 62 may be easily performed. The drive portion 41 may move the reflection mirror 21 so as to swing around the point where the light beam 50a corresponding to the substantially center of the image among the multiple light beams 50 is incident on the reflection mirror 21. The substantially center of the image refers to within a region of 1/50 times the size of the image from the center of the image.

Further, according to Example 1, as shown in FIG. 7, the image projection device 100 is prepared (step S10). The light beam 50 is emitted from the image projection device 100, the reflection mirror 21 is moved to move the convergence point 70 to multiple positions, and the light beam 50 at the convergence point 70 at each of the multiple positions is captured by the imaging portion 40 (step S14). From the captured image in which the imaging portion 40 captured the light beam 50 at the convergence point 70, control information is obtained that associates multiple points within the image captured by the imaging portion 40 with control values used to move the reflection mirror 21 in the case of the convergence point 70 being positioned at each of the multiple points (step S16). Thereby, control information that associates multiple points within the image captured by the imaging portion 40 with control values for positioning the convergence point 70 at the multiple points is obtained. Thus, by moving the reflection mirror 21 based on the position of the pupil 62 within the captured image 80 of the eye 60 captured by the imaging portion 40 and the obtained control information, even in the case of the user's gaze direction changing, the multiple light beams 50 may be incident on the pupil 62 and an image may continue to be projected onto the retina 61.

Further, in Example 1, as shown in FIG. 8(a) to FIG. 8(c), the imaging portion 40 captures the light beam 50 irradiated onto the screen 82 disposed at the position of the convergence point 70. Thereby, the light beam 50 at the convergence point 70 may be easily captured by the imaging portion 40.

Further, in Example 1, as shown in FIG. 7, the control information obtained from the captured image in which the imaging portion 40 captured the light beam 50 at the convergence point 70 is stored in the memory portion 42 provided in the image projection device 100 (step S18). Thereby, without performing communication with an external device, even in the case of the user's gaze direction changing, the multiple light beams 50 may be incident on the pupil 62 and an image may continue to be projected onto the retina 61.

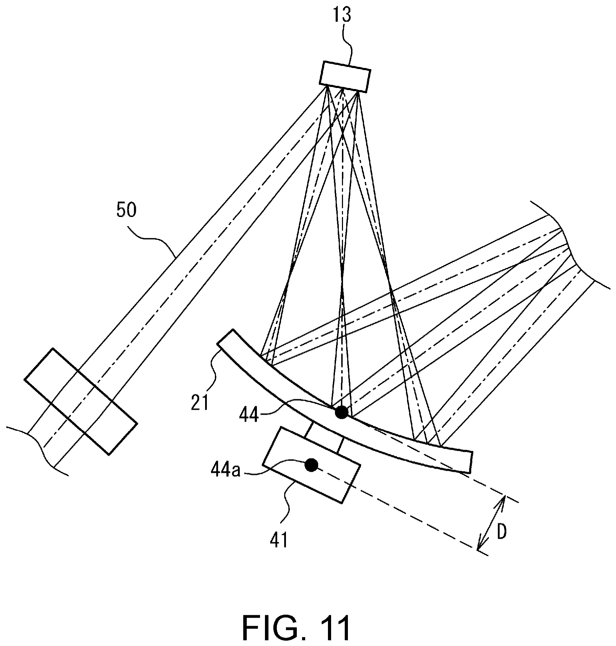

It is noted that in Example 1, the case where the swing center point 44 of the reflection mirror 21 is in the vicinity of the vertex of the concave surface at the central portion on the reflection mirror 21 has been described, but depending on the swing mechanism of the reflection mirror 21 by the drive portion 41, the swing center point may not necessarily be on the reflection mirror 21 but may be at a position with an offset. This will be described using FIG. 11. FIG. 11 is an enlarged view of the vicinity of the reflection mirror 21. As shown in FIG. 11, in Example 1, the case where the swing center point 44 is in the vicinity of the vertex of the concave surface of the reflection mirror 21, and the reflection mirror 21 is swung around the swing center point 44 by the drive portion 41 is shown as an example. However, the case is not limited to this, and depending on the drive mechanism of the drive portion 41, there may be a swing center point 44a at a position offset in the direction of the drive portion 41 (the direction opposite to the projection mirror 22), and the reflection mirror 21 may swing around this swing center point 44a. The distance D between the swing center point 44 and the swing center point 44a may be at most about 5 mm. This distance D is a distance that may occur in the case of disposing the component parts used in this Example 1 inside the glasses-type frame of the head mounted display. In the case of the distance D becoming large, it is visually recognized by the user as image distortion, but there is almost no influence if it is about 5 mm. The swing center point 44a is positioned in the vicinity of the central portion of the reflection mirror 21 within the range of this distance D.

### [Simulation 1]

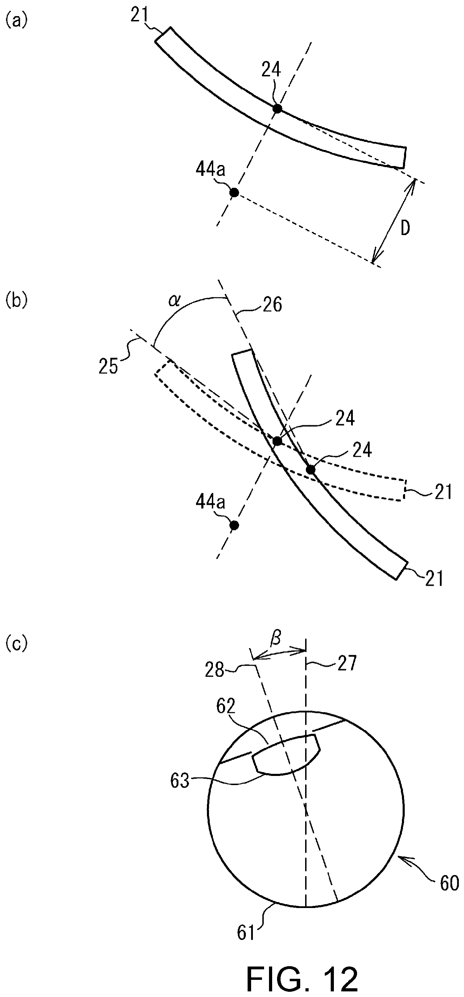

In Example 1, a simulation was performed regarding the relationship between the tilt angle of the reflection mirror 21 and the tilt angle of the eye 60 in the case of changing the offset amount of the swing center point 44a. FIG. 12(a) to FIG. 12(c) are diagrams showing the offset amount D of the swing center point 44a, the tilt angle α of the reflection mirror 21, and the tilt angle β of the eye 60 in Simulation 1. As shown in FIG. 12(a), the offset amount D of the swing center point 44a was set as the distance between the vertex 24 and the swing center point 44a in the direction perpendicular to the vertex 24 of the concave reflective surface of the reflection mirror 21. As shown in FIG. 12(b), the tilt angle α of the reflection mirror 21 was set as the angle formed by a straight line 25 passing through the vertex 24 of the concave reflective surface and the end point of the concave reflective surface in the case of not swinging the reflection mirror 21 (dotted line), and a straight line 26 passing through the vertex 24 of the concave reflective surface and the end point of the concave reflective surface in the case of swinging the reflection mirror 21 (solid line). As shown in FIG. 12(c), the tilt angle β of the eye 60 was set as the angle formed by the direction 27 in which the pupil 62 is facing according to the user looking straight ahead, and the direction 28 in which the pupil 62 is facing in the case of a light beam corresponding to the edge of the image passing through the center of the pupil 62 and being incident in the vicinity of the fovea of the retina 61 according to the user moving the eye 60 horizontally from the front to see the edge of the image in the case of the user having a horizontal field of view of 26° (see also FIG. 6(c)).

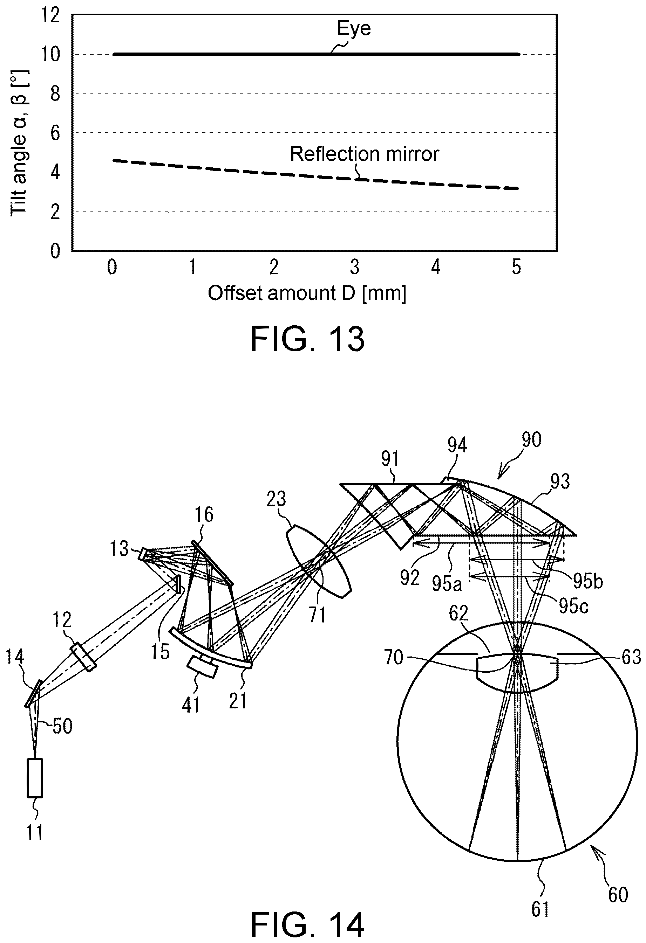

The results of Simulation 1 are shown in Table 2 and FIG. 13. As shown in Table 2 and FIG. 13, according to the offset amount D becoming larger, even if the tilt angle α of the reflection mirror 21 is made smaller, the tilt angle β for moving the eye 60 from the front to see the edge of the image may be made substantially the same. That is, according to the offset amount D becoming larger, even if the tilt angle α of the reflection mirror 21 is made smaller, the position of the convergence point 70 may be aligned with the pupil 62.

**[Table 2]**

| Offset amount D [mm] | Tilt angle of reflection mirror α [°] | Tilt angle of eye β [°] |
|---|---|---|
| 0 | 4.638 | 10.016 |
| 1 | 4.267 | 10.027 |
| 2 | 3.951 | 10.036 |
| 3 | 3.679 | 10.043 |
| 4 | 3.443 | 10.05 |
| 5 | 3.235 | 10.056 |

Since the movable range of the drive portion 41 that swings the reflection mirror 21 has limitations, there is an upper limit to the tilt angle α of the reflection mirror 21. Further, from the viewpoint of miniaturizing the image projection device, it is preferable that the swinging range of the reflection mirror 21 is small. From these considerations, it is preferable that the tilt angle α of the reflection mirror 21 does not become large. Thus, the reflection mirror 21 is made to swing around a swing center point 44a positioned at a position away from the reflection mirror 21, as shown in FIG. 11. This swing center point 44a is a position where, in the case of the pupil 62 moving from a direction facing forward with respect to the user's face to another direction, it is possible to make the swing amount of the reflection mirror 21 smaller and align the position of the convergence point 70 with the pupil 62, compared to swinging the reflection mirror 21 around a point on the reflection mirror 21. Thereby, even in the case of the user's gaze direction moving, the light beam 50 may be made to pass through the pupil 62 by swinging of the reflection mirror 21 within the movable range of the drive portion 41. Further, since the swing amount of the reflection mirror 21 may be small, the image projection device may be miniaturized, and blocking of the light beam 50 by swinging of the reflection mirror 21 may also be suppressed.

Since the maximum value of the tilt angle α that the reflection mirror 21 may take by driving by the drive portion 41 is normally about 4°, in Example 1, the offset amount D of the swing center point 44a is preferably 2 mm or more, and more preferably 3 mm or more. On the other hand, considering space constraints, the offset amount D is preferably 5 mm or less, and more preferably 4 mm or less.

### Example 2

FIG. 14 is a diagram mainly showing an optical system in the image projection device according to Example 2. As shown in FIG. 14, in Example 2, a plane mirror 14 is provided between the light source 11 and the lens 12. A plane mirror 15 is provided between the lens 12 and the scanning portion 13. A plane mirror 16 is provided between the scanning portion 13 and the reflection mirror 21. A light guide material 90 is provided in front of the user in place of the projection mirror 22. The light guide material 90 includes a reflective surface 91, a reflective surface 92, a projection surface 93, and a main body portion 94 on which these are provided. The main body portion 94 is formed of glass material such as cycloolefin polymer (COP) resin or acrylic resin. The reflective surface 91, the reflective surface 92, and the projection surface 93 are formed, for example, by vapor-depositing reflective material on glass material. The reflective surface 91, the reflective surface 92, and the projection surface 93 may all be beam splitters such as half mirrors. It is noted that the light guide material 90 may include a cover portion attached to the main body portion 94 so as to cover the reflective surface 91 and the projection surface 93 from the outside. The cover portion may be formed of glass material having substantially the same refractive index as the main body portion 94, and may be formed of, for example, glass material of the same material as the main body portion 94. Since other configurations are the same as Example 1, description thereof is omitted.

The light beam 50 emitted from the light source 11 reflects at the plane mirror 14 and enters the lens 12. The light beam 50 that has transmitted through the lens 12 reflects at the plane mirror 15 and enters the scanning portion 13. The light beam 50 scanned by the scanning portion 13 reflects at the plane mirror 16 and enters the reflection mirror 21. The light beam 50 that has reflected at the reflection mirror 21 and transmitted through the lens 23 enters the light guide material 90. The light beam 50 travels inside the main body portion 94 while reflecting at the reflective surface 91, the reflective surface 92, and the projection surface 93, and is emitted from the main body portion 94 to the outside. The reflective surface 91 and the reflective surface 92 are flat surfaces and are provided parallel to each other.

Each of the multiple light beams 50 that have entered the main body portion 94 travels toward the reflective surface 91 while converging. Each of the multiple light beams 50 focuses in the vicinity of the reflective surface 91. Each of the multiple light beams 50 reflected at the reflective surface 91 travels toward the reflective surface 92. For example, all of the multiple light beams 50 focus in front of the reflective surface 92, then become diffused light and enter the reflective surface 92. Each of the multiple light beams 50 reflected at the reflective surface 92 enters the projection surface 93 as diffused light. The projection surface 93 is a concave mirror and has positive focusing power. Thus, each of the multiple light beams 50 reflected at the projection surface 93 is converted from diffused light to substantially parallel light, and the multiple light beams 50 converge at the convergence point 70 inside the user's eye 60. The light beam 50 is converted from substantially parallel light to focused light by the crystalline lens 63 and focuses in the vicinity of the retina 61. In this way, the projection surface 93 corresponds to an emitting portion that converges the multiple light beams 50 emitted from the scanning portion 13 in different directions by being scanned by the scanning portion 13 at the convergence point 70 inside the eye 60, and then projects the light beams onto the retina 61 to project an image on the retina 61.

The reflective surface 92 includes a region 95a that reflects the light beam 50 reflected at the reflective surface 91 toward the projection surface 93, and a region 95b that transmits the light beam 50 reflected at the projection surface 93, and the regions 95a and 95b partially overlap. In this overlapping region 95c, both the function of reflecting the light beam 50 and the function of transmitting the light beam 50 are required. The incident angle at which the light beam 50 reflected at the reflective surface 91 enters the reflective surface 92 is larger than the incident angle at which the light beam 50 reflected at the projection surface 93 enters the reflective surface 92. Thus, at least in the region 95c of the reflective surface 92, by providing angle dependency such that the light beam 50 with a large incident angle is mainly reflected and the light beam 50 with a small incident angle is mainly transmitted, it is possible to achieve both reflecting the light beam 50 reflected at the reflective surface 91 and transmitting the light beam 50 reflected at the projection surface 93. Further, it is sufficient that the light beam 50 reflected at the projection surface 93 is projected onto the retina 61, and even if the light beam 50 reflected at the reflective surface 91 transmits through the reflective surface 92, it does not substantially affect the system. Thus, by using a beam splitter such as a half mirror for the reflective surface 92, it is also possible to achieve both reflecting the light beam 50 reflected at the reflective surface 91 and transmitting the light beam 50 reflected at the projection surface 93.

According to Example 2, multiple light beams 50 scanned by the scanning portion 13 are incident on the light guide material 90 after converging at the convergence point 71 in front of the light guide material 90 by the reflection mirror 21. The light guide material 90 is formed of a glass material through which the multiple light beams 50 transmit internally, and guides the multiple light beams 50 to the projection surface 93 (emitting portion) by reflecting them at the reflective surface 91 and the reflective surface 92. Even in this case, by moving the reflection mirror 21 so that the position where the multiple light beams 50 are incident on the lens 23 changes according to the direction in which the pupil 62 moves, the multiple light beams 50 may be incident on the pupil 62 even in the case of the pupil 62 moving. Further, the light beam 50 travels inside the light guide material 90 from the temple side of the glasses-type frame toward the eye 60 side, and each component part of the projection portion 10 such as the scanning portion 13 may be arranged along the contour of the user's face. Thus, sufficient clearance may be secured between the image projection device and the user's face.

In Example 2 as well, similar to FIG. 11 of Example 1, the reflection mirror 21 may swing around the swing center point 44a at a position offset in the direction of the drive portion 41.

### [Simulation 2]

In Example 2, a simulation was performed regarding the relationship between the tilt angle α of the reflection mirror 21 and the tilt angle β of the eye 60 in the case of changing the offset amount D of the swing center point 44a. Since the offset amount D of the swing center point 44a, the tilt angle α of the reflection mirror 21, and the tilt angle β of the eye 60 have been described in Simulation 1, the description is omitted here. However, regarding the tilt angle β, as the horizontal field of view, Simulation 1 assumed the case of 26°, whereas this Simulation 2 assumes 40°.

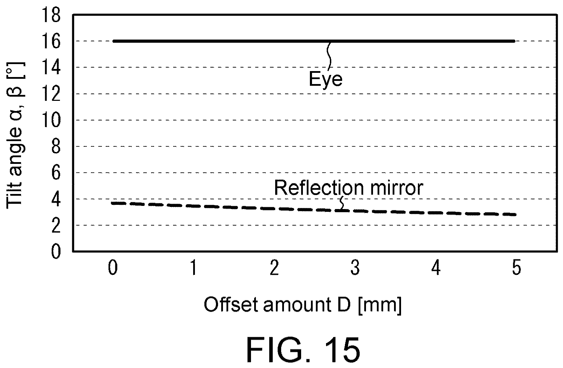

The results of Simulation 2 are shown in Table 3 and FIG. 15. As shown in Table 3 and FIG. 15, in Example 2 as well, similar to Example 1, in the case of the offset amount D becoming larger, even according to making the tilt angle α of the reflection mirror 21 smaller, the tilt angle β for moving the eye 60 from the front to see the edge of the image may be made substantially the same.

**[Table 3]**

| Offset amount D [mm] | Tilt angle of reflection mirror α [°] | Tilt angle of eye β [°] |
|---|---|---|
| 0 | 3.647 | 16.031 |
| 1 | 3.422 | 16.038 |
| 2 | 3.224 | 16.045 |
| 3 | 3.047 | 16.051 |
| 4 | 2.888 | 16.056 |
| 5 | 2.745 | 16.061 |

Thus, in Example 2 as well, similar to Example 1, by swinging the reflection mirror 21 around the swing center point 44a at a position away from the reflection mirror 21, even in the case of the user's gaze direction moving, the light beam 50 may pass through the pupil 62 by the swing of the reflection mirror 21 within the movable range of the drive portion 41. Thus, the image projection device may be miniaturized, and blocking of the light beam 50 by the swing of the reflection mirror 21 may be suppressed.

### Example 3

Example 3 is an example in the case of varying the position where the imaging portion 40 is provided. In Example 1 and Example 2, as shown in FIG. 1, the imaging portion 40 is provided in front of the user's eye 60. In this case, the imaging portion 40 may enter the horizon according to the user looking forward. Further, according to the imaging portion 40 being provided in front of the eye 60, this also leads to enlargement of the image projection device. Thus, Example 3 shows an example in the case of providing the imaging portion 40 at a location other than forward of the eye 60.

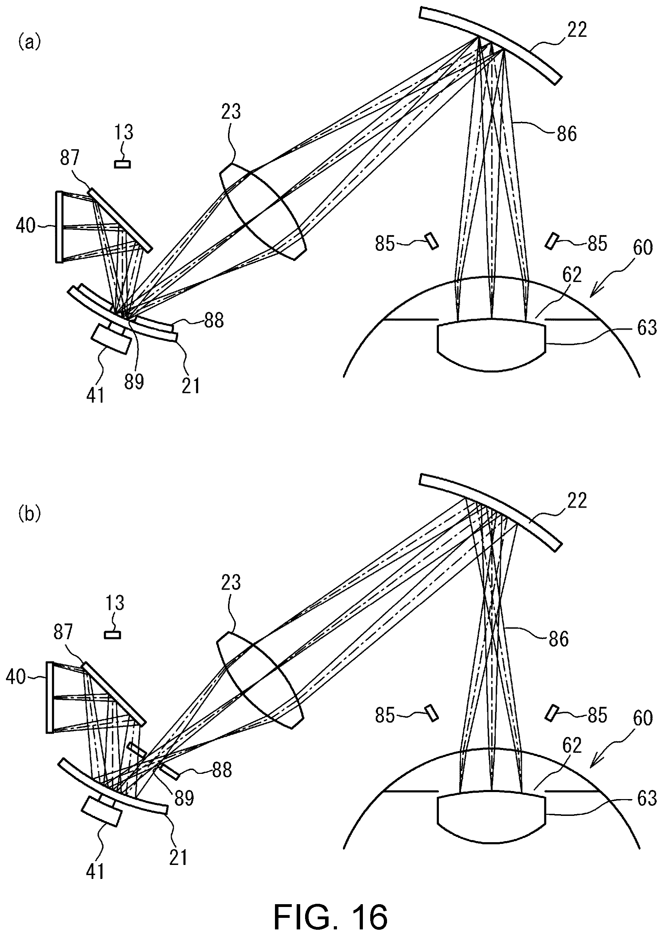

FIG. 16(a) and FIG. 16(b) are diagrams mainly showing the optical system in the image projection device according to Example 3. In FIG. 16(a) and FIG. 16(b), reflected light 86 emitted from the illumination light source 85 and reflected by the eye 60 is also illustrated. As shown in FIG. 16(a) and FIG. 16(b), in Example 3, a beam splitter 87 is provided in the optical path between the scanning portion 13 and the reflection mirror 21. The beam splitter 87 may be a half mirror. The scanning portion 13 is provided on the opposite side from the reflection mirror 21 with the beam splitter 87 interposed therebetween. The imaging portion 40 is provided at a position symmetrical to the scanning portion 13 with respect to the beam splitter 87. That is, the scanning portion 13 and the imaging portion 40 are provided on opposite sides from each other with respect to the beam splitter 87.

An illumination light source 85 that emits infrared light toward the eye 60 is provided. The illumination light source 85 is, for example, an LED light source. An aperture member 88 having an opening 89 is provided on the concave reflective surface of the reflection mirror 21 (see FIG. 16(a)), or between the reflection mirror 21 and the lens 23 (see FIG. 16(b)). In the case of being provided between the reflection mirror 21 and the lens 23 as shown in FIG. 16(b), the aperture member 88 is preferably provided closer to the reflection mirror 21 than the lens 23. The aperture member 88 has a property of transmitting light in the wavelength band of the light beam 50 scanned by the scanning portion 13, and not transmitting light in the wavelength band of the reflected light 86 other than at the opening 89. For example, the aperture member 88 has a property of transmitting light in the visible light wavelength band, and not transmitting light in the infrared light wavelength band other than at the opening 89. Since other configurations are the same as Example 1, description thereof is omitted.

The infrared light emitted from the illumination light source 85 is reflected by the eye 60. In FIG. 16(a) and FIG. 16(b), the reflected light 86 that passes through the opening 89 of the aperture member 88 among the reflected light 86 consisting of infrared light reflected by the eye 60 is illustrated as being emitted from a point light source of the eye 60. The reflected light 86 is reflected by the projection mirror 22, then transmits through the lens 23 and enters the aperture member 88. Since the aperture member 88 does not transmit the reflected light 86 other than at the opening 89, only the reflected light 86 that passes through the opening 89 is reflected by the reflection mirror 21. The reflected light 86 reflected by the reflection mirror 21 is reflected by the beam splitter 87, and then enters the imaging portion 40. Thereby, the imaging portion 40 may capture an image of the eye 60. It is noted that the light emitted from the illumination light source 85 may be light other than infrared light, but is preferably light in a wavelength band that cannot be perceived by the user.

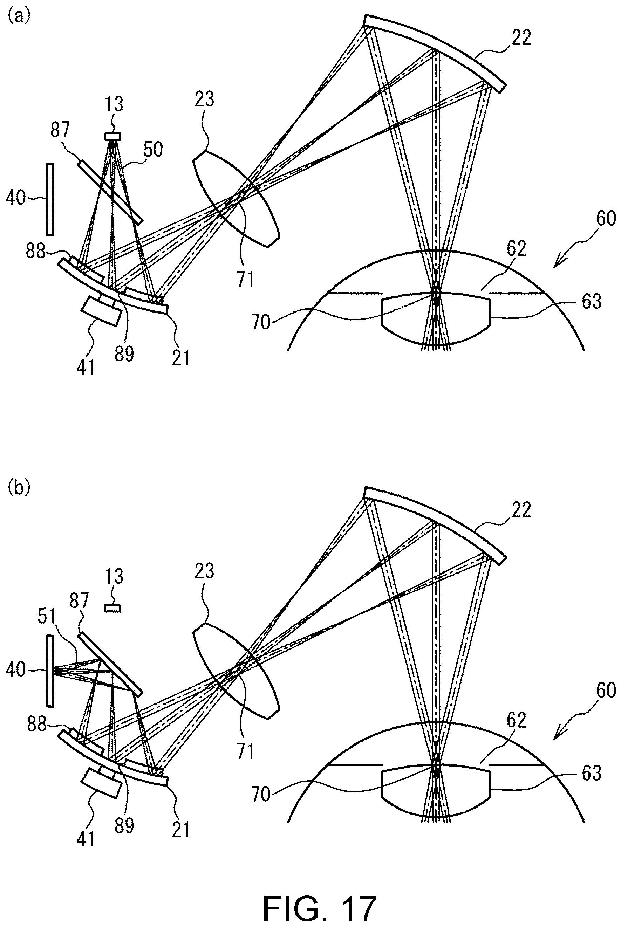

FIG. 17(a) and FIG. 17(b) are diagrams showing the positional relationship between the scanning portion and imaging portion and the convergence point in the eye in Example 3. FIG. 17(a) illustrates the light beam 50 scanned by the scanning portion 13. FIG. 17(b) illustrates the light beam 51 in the case of assuming that the light beam 51 is emitted from the imaging portion 40. It is noted that FIG. 17(a) and FIG. 17(b) illustrate the case where the aperture member 88 is provided on the concave reflective surface of the reflection mirror 21, but the same applies to the case where it is provided between the reflection mirror 21 and the lens 23.

As shown in FIG. 17(a), the light beam 50 scanned by the scanning portion 13 transmits through the beam splitter 87 and enters the aperture member 88. Since the aperture member 88 has the property of transmitting light in the wavelength band of the light beam 50, the light beam 50 transmits through the aperture member 88 and is reflected by the reflection mirror 21. The light beam 50 reflected by the reflection mirror 21 passes through the lens 23 and the projection mirror 22, converges at the convergence point 70 inside the eye 60, and then is projected onto the retina 61. Thus, the scanning portion 13 and the convergence point 70 are in a conjugate relationship. As shown in FIG. 17(b), the light beam 51 assumed to be emitted from the imaging portion 40 is reflected by the beam splitter 87, and then follows the same optical path as the light beam 50 to be projected onto the eye 60. Thus, in addition to the scanning portion 13 and the convergence point 70 being in a conjugate relationship, the imaging portion 40 and the convergence point 70 are also in a conjugate relationship.

### Example 4

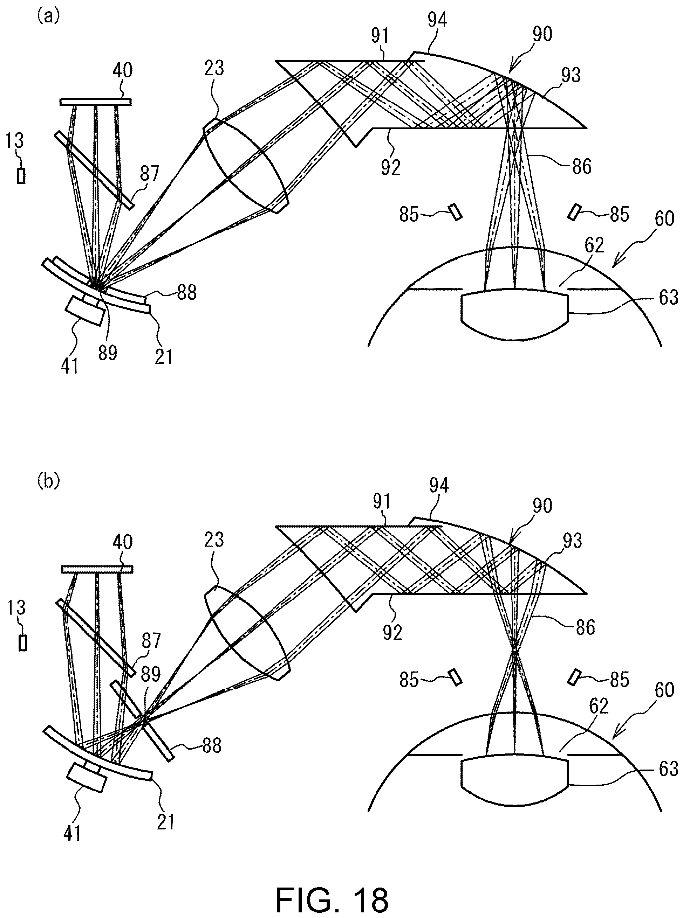

Example 4 is also an example of providing the imaging portion 40 at a location other than forward of the eye 60, similar to Example 3. FIG. 18(a) and FIG. 18(b) are diagrams mainly showing the optical system in the image projection device according to Example 4. In FIG. 18(a) and FIG. 18(b), reflected light 86 emitted from the illumination light source 85 and reflected by the eye 60 is also illustrated. As shown in FIG. 18(a) and FIG. 18(b), in Example 4, similar to Example 3, the beam splitter 87 is provided in the optical path between the scanning portion 13 and the reflection mirror 21. The imaging portion 40 is provided on the opposite side of the reflection mirror 21 across the beam splitter 87, and is provided at a position symmetrical to the scanning portion 13 with respect to the beam splitter 87. That is, the scanning portion 13 and the imaging portion 40 are provided on opposite sides from each other with respect to the beam splitter 87. The illumination light source 85 that emits infrared light to the eye 60 is provided. An aperture member 88 having an opening 89 is provided on the concave reflective surface of the reflection mirror 21 (see FIG. 18(a)), or between the reflection mirror 21 and the lens 23 (see FIG. 18(b)). Since other configurations are the same as Example 2, description thereof is omitted.

The infrared light from the illumination light source 85 is reflected by the eye 60. In FIG. 18(a) and FIG. 18(b), similar to Example 3, the reflected light 86 that passes through the opening 89 of the aperture member 88 among the reflected light 86 consisting of infrared light reflected by the eye 60 is illustrated as light emitted from a point light source of the eye 60. The reflected light 86 enters the light guide material 90, travels within the light guide material 90 while being reflected by the projection surface 93, the reflective surface 92, and the reflective surface 91, then exits from the light guide material 90, transmits through the lens 23, and enters the aperture member 88. Since the aperture member 88 does not transmit the reflected light 86 other than at the opening 89, only the reflected light 86 that passes through the opening 89 is reflected by the reflection mirror 21. The reflected light 86 reflected by the reflection mirror 21 transmits through the beam splitter 87 and then enters the imaging portion 40. Thereby, the imaging portion 40 may capture an image of the eye 60.

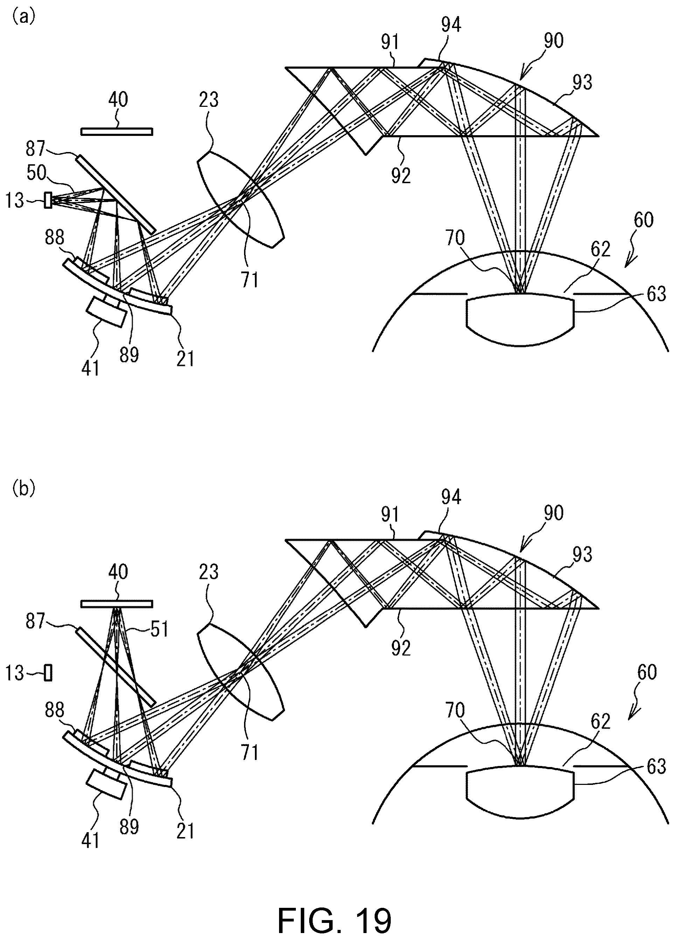

FIG. 19(a) and FIG. 19(b) are diagrams showing the positional relationship between the scanning portion and imaging portion and the convergence point in the eye in Example 4. FIG. 19(a) illustrates the light beam 50 scanned by the scanning portion 13. FIG. 19(b) illustrates the light beam 51 in the case of assuming that the light beam 51 is emitted from the imaging portion 40. As shown in FIG. 19(a), the light beam 50 scanned by the scanning portion 13 is reflected by the beam splitter 87, then transmits through the aperture member 88 and enters the reflection mirror 21. The light beam 50 reflected by the reflection mirror 21 passes through the lens 23 and the light guide material 90, converges at the convergence point 70 within the eye 60, and then is projected onto the retina 61. As shown in FIG. 19(b), the light beam 51 assumed to be emitted from the imaging portion 40 transmits through the beam splitter 87, then follows the same optical path as the light beam 50 and is projected onto the eye 60. In this way, in addition to the scanning portion 13 and the convergence point 70 being in a conjugate relationship, the imaging portion 40 and the convergence point 70 are also in a conjugate relationship.

According to Example 3 and Example 4, the beam splitter 87 is provided between the scanning portion 13 and the reflection mirror 21. The scanning portion 13 and the imaging portion 40 are positioned on opposite sides with respect to the beam splitter 87. Multiple light beams 50 emitted from the scanning portion 13 transmit through or are reflected by the beam splitter 87 and enter the reflection mirror 21. The reflected light 86 reflected by the eye 60 is reflected or transmits through the beam splitter 87 and enters the imaging portion 40. Thereby, the imaging portion 40 may capture an image of the eye 60 without providing the imaging portion 40 in front of the eye 60. Thus, it is possible to suppress the imaging portion 40 from entering the horizon. Moreover, since the imaging portion 40 is provided on the opposite side of the beam splitter 87 from the scanning portion 13, it is possible to suppress an increase in size of the image projection device.

### [Comparative Example]

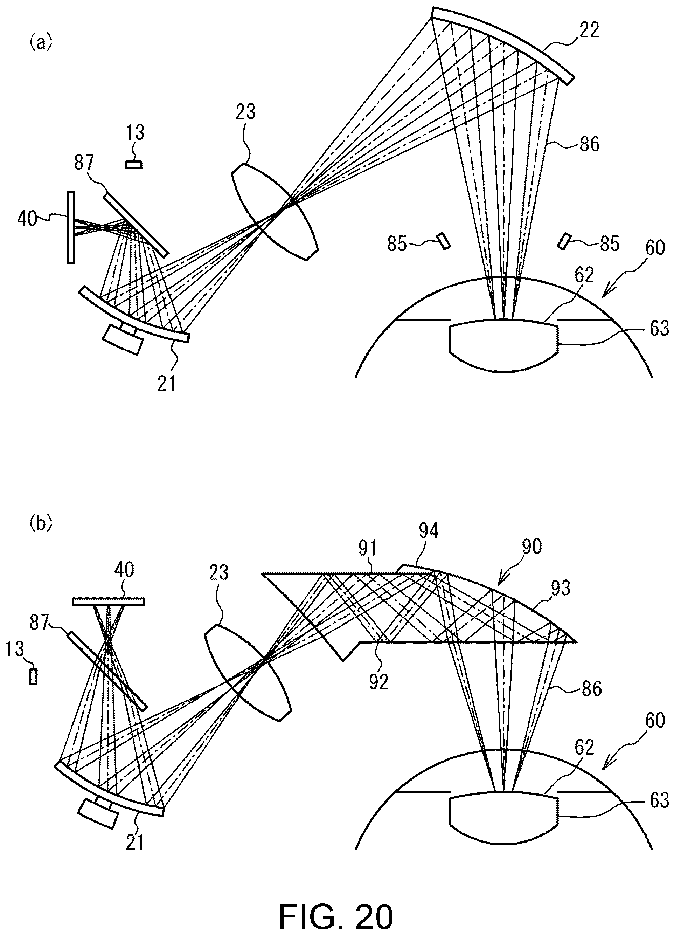

FIG. 20(a) is a diagram mainly showing the optical system in the image projection device according to Comparative Example 1. FIG. 20(b) is a diagram mainly showing the optical system in the image projection device according to Comparative Example 2. In FIG. 20(a) and FIG. 20(b), the reflected light 86 emitted from the illumination light source 85 and reflected by the eye 60 is also illustrated. As shown in FIG. 20(a), Comparative Example 1 has the same configuration as Example 3 except that the aperture member 88 is not provided. As shown in FIG. 20(b), Comparative Example 2 has the same configuration as Example 4 except that the aperture member 88 is not provided.

As shown in FIG. 20(a) and FIG. 20(b), in the case of the aperture member 88 not being provided, the reflected light 86 propagates through the effective area of the optical system such as the projection mirror 22 and the light guide material 90 to the maximum extent and enters the imaging portion 40. In this case, the optical system receives the reflected light 86 from a minute region of the center portion of the pupil 62 at the imaging portion 40. Thus, the imaging portion 40 may only capture an image of the minute region of the center portion of the pupil 62, and is not suitable for detecting the gaze direction.

On the other hand, in Example 3 and Example 4, the aperture member 88 having the opening 89 is provided on the concave reflective surface of the reflection mirror 21 or between the reflection mirror 21 and the lens 23. The aperture member 88 has properties of allowing the light beam 50 and the reflected light 86 to transmit through at the opening 89, and allowing the light beam 50 to transmit through but not allowing the reflected light 86 to pass through at portions other than the opening 89. Thereby, as shown in FIG. 16(a) and FIG. 16(b), and FIG. 18(a) and FIG. 18(b), most of the pupil 62 may be captured by the imaging portion 40. Thus, the gaze direction may be detected even in the case of the gaze direction being greatly inclined.

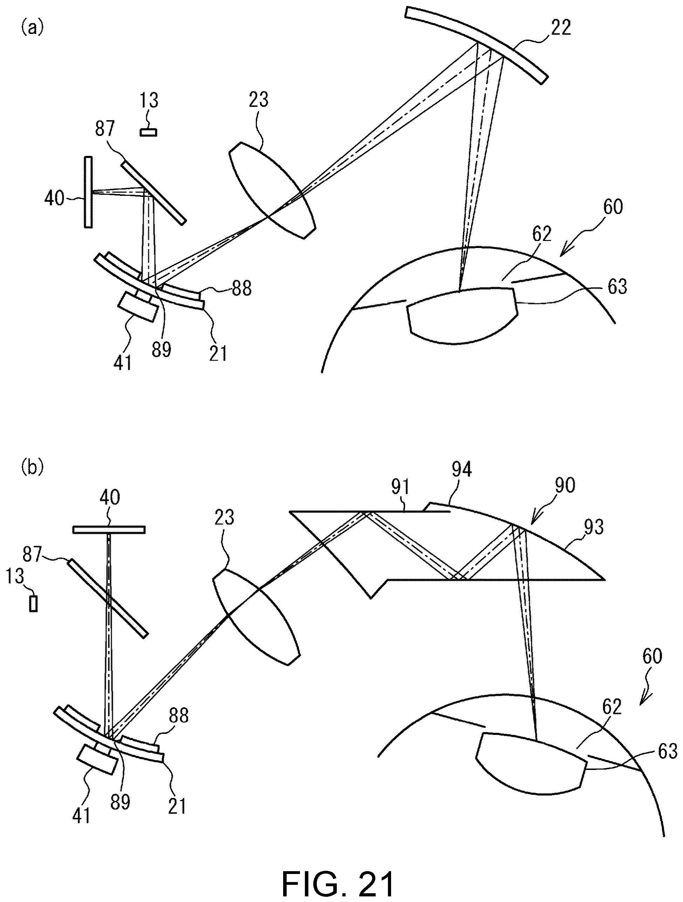

Moreover, in Example 3 and Example 4, in addition to the scanning portion 13 and the convergence point 70 in the eye 60 having a conjugate relationship, the imaging portion 40 and the convergence point 70 in the eye 60 also have a conjugate relationship. The effect of the imaging portion 40 and the convergence point 70 having a conjugate relationship will be described using FIG. 21(a) and FIG. 21(b). As described above, in the case of the user inclining the gaze direction from the front direction to another direction, the reflection mirror 21 swings so that the multiple light beams 50 scanned by the scanning portion 13 continue to enter the pupil 62. In this case, as shown in FIG. 21(a) and FIG. 21(b), according to the imaging portion 40 and the convergence point 70 having a conjugate relationship, the conjugate relationship is maintained even in the case of the reflection mirror 21 swinging. Thus, the center of the pupil 62 may be continuously positioned at the center of the captured image captured by the imaging portion 40.

It is noted that in Example 1 to Example 4, the reflection mirror 21 and the projection mirror 22 are not limited to the case of concave mirrors, and may be other optical components such as combining lenses and mirrors, using diffractive elements, etc., other than curved mirrors, as long as they have positive focusing power. The lens 23 is not limited to the case of a convex lens, and may be other optical members such as mirrors or diffractive elements, as long as it is possible to make the light beam 50 incident on the projection mirror 22 as diffused light. The lens 23 may have a function of suppressing chromatic aberration.

It is noted that in Example 1 to Example 4, the convergence angle θ2 at which the multiple light beams 50 converge at the convergence point 70 is preferably equal to or greater than the scanning angle θ1 of the scanning portion 13 in both cases before and after the reflection mirror 21 moves. Thereby, the field of view of the image projected on the retina 61 may be kept large.

It is noted that in Example 1 to Example 4, the image projection device 100 may be attached to a glasses-type frame, or may be attached to a goggle-type, eye patch-type, ear-hook type, or helmet-mounted type frame.

The examples of the present invention have been described in detail above, but the present invention is not limited to such specific examples, and various modifications and changes are possible within the scope of the gist of the present invention described in the claims.

### Reference Signs List

10...Projection portion, 11...Light source, 12...Lens, 13...Scanning portion, 14...Plane mirror, 15...Plane mirror, 16...Plane mirror, 20...Projection optical system, 21...Reflection mirror (reflection portion), 22...Projection mirror (emitting portion), 23...Lens (optical member), 24...Vertex, 25...Straight line, 26...Straight line, 27...Facing direction, 28...Facing direction, 30...Control portion, 31...Projection control portion, 32...Position control portion, 33...Imaging control portion, 34...Identifying portion, 40...Imaging portion, 41...Drive portion, 42...Memory portion, 44, 44a...Swing center point, 50, 50a, 50b, 50c...Light beam, 51...Light beam, 60...Eye, 61...Retina, 62...Pupil, 63...Crystalline lens, 65...Sclera, 66...Iris, 70...Convergence point (first convergence point), 71...Convergence point (second convergence point), 72...Focusing point, 80...Captured image, 82...Screen, 84...Captured image, 85...Illumination light source, 86...Reflected light, 87...Beam splitter, 88...aperture member, 89...Opening, 90...Light guide material, 91...Reflective surface, 92...Reflective surface, 93...Projection surface, 94...Main body portion, 95a, 95b, 95c...Region, 100...Image projection device

## Claims

1. An image projection device, comprising:
a projection portion comprising: a light source; a scanning portion, scanning light beams emitted from the light source; and a projection optical system, converging a plurality of the light beams emitted from the scanning portion in different directions by being scanned by the scanning portion to a first convergence point inside a user's eye and then projecting the light beams onto a retina to project an image on the retina;
an imaging portion, capturing an image of the user's eye;
an identifying portion, identifying a position of a pupil in a captured image of the user's eye captured by the imaging portion; and
a position control portion, moving a component provided in the projection portion capable of moving a position of the first convergence point based on a position of the pupil in the captured image identified by the identifying portion and control information that associates a plurality of points in an image captured by the imaging portion with control values for positioning the first convergence point at the plurality of points, and aligning a position of the first convergence point with the pupil.

2. The image projection device according to claim 1, wherein the position control portion obtains the control value corresponding to a position of the pupil in the captured image from the control information and moves the component using the control value obtained to align a position of the first convergence point with the pupil.

3. The image projection device according to claim 1 or 2, wherein the component is a component that constitutes the projection optical system.

4. The image projection device according to claim 1 or 2, comprising: a drive portion, moving the component,
wherein the drive portion is a biaxial actuator, and
the position control portion moves the component by controlling the drive portion using the control value.

5. The image projection device according to claim 1 or 2, comprising a memory portion that stores the control information.

6. The image projection device according to claim 1, wherein the projection optical system comprises: an emitting portion disposed in front of the user's eye and configured to converge the plurality of light beams at the first convergence point; a reflection portion configured to converge the plurality of light beams emitted from the scanning portion at a second convergence point in front of the emitting portion; and an optical member provided between the emitting portion and the reflection portion and configured to convert each of the plurality of light beams into focused light to focus light at a focusing point in front of the emitting portion and then cause the light to enter the emitting portion as diffused light, and
the component is the reflection portion.

7. The image projection device according to claim 6, wherein the position control portion, when the pupil moves from a direction facing forward with respect to a face of the user to another direction, moves the reflection portion so that incident positions of the plurality of light beams on the optical member move from a central portion of the optical member to a region on an opposite side to a direction corresponding to a direction in which the pupil moved with respect to a direction in which the plurality of light beams transmit through the optical member, thereby causing the plurality of light beams incident on the optical member to be refracted by the optical member toward a direction side corresponding to a direction in which the pupil moved.

8. The image projection device according to claim 6, wherein the position control portion, when the pupil moves from a direction facing forward with respect to a face of the user to another direction, moves the reflection portion so that at least a light beam corresponding to a center of the image among the plurality of light beams enters the pupil from an opposite side to a direction in which the pupil moved with reference to a direction in which the pupil faces after moving and projects onto a region of the retina on a direction side in which the pupil moved.

9. The image projection device according to claim 6, wherein the optical member has image height characteristics such that a distance between the optical member and the focusing point for each of the plurality of light beams becomes substantially constant even when a region where the plurality of light beams are incident changes due to movement of the reflection portion.

10. The image projection device according to claim 5, wherein different control information is stored for each different image projection device.

11. The image projection device according to claim 6, wherein the position control portion moves the reflection portion to swing around a swing center point at a position away from the reflection portion, and
when the pupil moves from a direction facing forward with respect to a face of the user to another direction, the swing center point is at a position where a position of the first convergence point is capable of being aligned with the pupil by making a swing amount of the reflection portion smaller than when the reflection portion is swung around a point on the reflection portion.

12. The image projection device according to claim 6, comprising a beam splitter, provided between the scanning portion and the reflection portion,
wherein the scanning portion and the imaging portion are positioned on opposite sides with respect to the beam splitter,
the plurality of light beams emitted from the scanning portion in different directions transmit through or are reflected by the beam splitter and are incident on the reflection portion, and
a reflected light reflected by the user's eye is reflected or transmits through the beam splitter and is incident on the imaging portion.

13. The image projection device according to claim 12, comprising an aperture member provided on a reflective surface of the reflection portion or between the reflection portion and the optical member, having an opening, wherein the opening allows the light beam and the reflected light to pass through, and having a property of allowing the light beam to transmit through and not allowing the reflected light to transmit through at portions other than the opening.

14. The image projection device according to claim 12 or 13, wherein the scanning portion and the first convergence point are in a conjugate relationship, and the imaging portion and the first convergence point are in a conjugate relationship.

15. A method for manufacturing an image projection device, comprising:
a step of preparing an image projection device having a projection portion and a imaging portion, the projection portion comprising: a light source; a scanning portion, scanning light beams emitted from the light source; and a projection optical system, converging a plurality of the light beams emitted from the scanning portion in different directions by being scanned by the scanning portion to a convergence point inside a user's eye and then projecting the light beams onto a retina to project an image on the retina, and the imaging portion capturing an image of the user's eye;
a step of emitting the plurality of light beams from the image projection device, moving a component provided in the projection portion capable of moving the convergence point to move the convergence point to a plurality of positions, and capturing the plurality of light beams at the convergence point at each of the plurality of positions using the imaging portion; and
a step of obtaining control information that associates a plurality of points in an image captured by the imaging portion with control values that controlled movement of the component when the convergence point is positioned at each of the plurality of points, from captured images in which the imaging portion captured the plurality of light beams at the convergence point.

16. The method for manufacturing the image projection device according to claim 15, wherein the capturing step captures the plurality of light beams irradiated onto a screen disposed at a position of the convergence point.

17. The method for manufacturing the image projection device according to claim 15 or 16, comprising a step of storing the control information in a memory portion provided in the image projection device.

18. The method for manufacturing the image projection device according to claim 17, wherein different control information is stored in the memory portion for each different image projection device.

## Amended claims

### Amended claims under Art. 19.1 PCT

1. An image projection device, comprising:
a projection portion comprising: a light source; a scanning portion, scanning light beams emitted from the light source; and a projection optical system, converging a plurality of the light beams emitted from the scanning portion in different directions by being scanned by the scanning portion to a first convergence point inside a user's eye and then projecting the light beams onto a retina to project an image on the retina;
an imaging portion, capturing an image of the user's eye;
an identifying portion, identifying a position of a pupil in a captured image of the user's eye captured by the imaging portion; and
a position control portion, moving a component provided in the projection portion capable of moving a position of the first convergence point based on a position of the pupil in the captured image identified by the identifying portion and control information that associates a plurality of points in an image captured by the imaging portion with control values for positioning the first convergence point at the plurality of points, and aligning a position of the first convergence point with the pupil,
wherein the projection optical system comprises: an emitting portion disposed in front of the user's eye and configured to converge the plurality of light beams at the first convergence point; a reflection portion configured to converge the plurality of light beams emitted from the scanning portion at a second convergence point in front of the emitting portion; and an optical member provided between the emitting portion and the reflection portion and configured to convert each of the plurality of light beams into focused light to focus light at a focusing point in front of the emitting portion and then cause the light to enter the emitting portion as diffused light,
the component is the reflection portion, and
the position control portion, when the pupil moves from a direction facing forward with respect to a face of the user to another direction, moves the reflection portion so that incident positions of the plurality of light beams on the optical member move from a central portion of the optical member to a region on an opposite side to a direction corresponding to a direction in which the pupil moved with respect to a direction in which the plurality of light beams transmit through the optical member, thereby causing the plurality of light beams incident on the optical member to be refracted by the optical member toward a direction side corresponding to a direction in which the pupil moved.

2. The image projection device according to claim 1, wherein the position control portion obtains the control value corresponding to a position of the pupil in the captured image from the control information and moves the component using the control value obtained to align a position of the first convergence point with the pupil.

3. An image projection device, comprising:
a projection portion comprising: a light source; a scanning portion, scanning light beams emitted from the light source; and a projection optical system, converging a plurality of the light beams emitted from the scanning portion in different directions by being scanned by the scanning portion to a first convergence point inside a user's eye and then projecting the light beams onto a retina to project an image on the retina;
an imaging portion, capturing an image of the user's eye;
an identifying portion, identifying a position of a pupil in a captured image of the user's eye captured by the imaging portion; and
a position control portion, moving a component provided in the projection portion capable of moving a position of the first convergence point based on a position of the pupil in the captured image identified by the identifying portion and control information that associates a plurality of points in an image captured by the imaging portion with control values for positioning the first convergence point at the plurality of points, and aligning a position of the first convergence point with the pupil,
wherein the projection optical system comprises: an emitting portion disposed in front of the user's eye and configured to converge the plurality of light beams at the first convergence point; a reflection portion configured to converge the plurality of light beams emitted from the scanning portion at a second convergence point in front of the emitting portion; and an optical member provided between the emitting portion and the reflection portion and configured to convert each of the plurality of light beams into focused light to focus light at a focusing point in front of the emitting portion and then cause the light to enter the emitting portion as diffused light,
the component is the reflection portion, and
the position control portion, when the pupil moves from a direction facing forward with respect to a face of the user to another direction, moves the reflection portion so that at least a light beam corresponding to a center of the image among the plurality of light beams enters the pupil from an opposite side to a direction in which the pupil moved with reference to a direction in which the pupil faces after moving and projects onto a region of the retina on a direction side in which the pupil moved.

4. An image projection device, comprising:
a projection portion comprising: a light source; a scanning portion, scanning light beams emitted from the light source; and a projection optical system, converging a plurality of the light beams emitted from the scanning portion in different directions by being scanned by the scanning portion to a first convergence point inside a user's eye and then projecting the light beams onto a retina to project an image on the retina;
an imaging portion, capturing an image of the user's eye;
an identifying portion, identifying a position of a pupil in a captured image of the user's eye captured by the imaging portion; and
a position control portion, moving a component provided in the projection portion capable of moving a position of the first convergence point based on a position of the pupil in the captured image identified by the identifying portion and control information that associates a plurality of points in an image captured by the imaging portion with control values for positioning the first convergence point at the plurality of points, and aligning a position of the first convergence point with the pupil,
wherein the projection optical system comprises: an emitting portion disposed in front of the user's eye and configured to converge the plurality of light beams at the first convergence point; a reflection portion configured to converge the plurality of light beams emitted from the scanning portion at a second convergence point in front of the emitting portion; and an optical member provided between the emitting portion and the reflection portion and configured to convert each of the plurality of light beams into focused light to focus light at a focusing point in front of the emitting portion and then cause the light to enter the emitting portion as diffused light, and
the component is the reflection portion, and
the optical member has image height characteristics such that a distance between the optical member and the focusing point for each of the plurality of light beams becomes substantially constant even when a region where the plurality of light beams are incident changes due to movement of the reflection portion.

5. An image projection device, comprising:
a projection portion comprising: a light source; a scanning portion, scanning light beams emitted from the light source; and a projection optical system, converging a plurality of the light beams emitted from the scanning portion in different directions by being scanned by the scanning portion to a first convergence point inside a user's eye and then projecting the light beams onto a retina to project an image on the retina;
an imaging portion, capturing an image of the user's eye;
an identifying portion, identifying a position of a pupil in a captured image of the user's eye captured by the imaging portion; and
a position control portion, moving a component provided in the projection portion capable of moving a position of the first convergence point based on a position of the pupil in the captured image identified by the identifying portion and control information that associates a plurality of points in an image captured by the imaging portion with control values for positioning the first convergence point at the plurality of points, and aligning a position of the first convergence point with the pupil,
wherein the projection optical system comprises: an emitting portion disposed in front of the user's eye and configured to converge the plurality of light beams at the first convergence point; a reflection portion configured to converge the plurality of light beams emitted from the scanning portion at a second convergence point in front of the emitting portion; and an optical member provided between the emitting portion and the reflection portion and configured to convert each of the plurality of light beams into focused light to focus light at a focusing point in front of the emitting portion and then cause the light to enter the emitting portion as diffused light,
the component is the reflection portion,
the position control portion moves the reflection portion to swing around a swing center point at a position away from the reflection portion, and
when the pupil moves from a direction facing forward with respect to a face of the user to another direction, the swing center point is at a position where a position of the first convergence point is capable of being aligned with the pupil by making a swing amount of the reflection portion smaller than when the reflection portion is swung around a point on the reflection portion.

6. An image projection device, comprising:
a projection portion comprising: a light source; a scanning portion, scanning light beams emitted from the light source; and a projection optical system, converging a plurality of the light beams emitted from the scanning portion in different directions by being scanned by the scanning portion to a first convergence point inside a user's eye and then projecting the light beams onto a retina to project an image on the retina;
an imaging portion, capturing an image of the user's eye;
an identifying portion, identifying a position of a pupil in a captured image of the user's eye captured by the imaging portion; and
a position control portion, moving a component provided in the projection portion capable of moving a position of the first convergence point based on a position of the pupil in the captured image identified by the identifying portion and control information that associates a plurality of points in an image captured by the imaging portion with control values for positioning the first convergence point at the plurality of points, and aligning a position of the first convergence point with the pupil,
wherein the projection optical system comprises: an emitting portion disposed in front of the user's eye and configured to converge the plurality of light beams at the first convergence point; a reflection portion configured to converge the plurality of light beams emitted from the scanning portion at a second convergence point in front of the emitting portion; and an optical member provided between the emitting portion and the reflection portion and configured to convert each of the plurality of light beams into focused light to focus light at a focusing point in front of the emitting portion and then cause the light to enter the emitting portion as diffused light, and
the component is the reflection portion,
the image projection device comprises a beam splitter, provided between the scanning portion and the reflection portion,
wherein the scanning portion and the imaging portion are positioned on opposite sides with respect to the beam splitter,
the plurality of light beams emitted from the scanning portion in different directions transmit through or are reflected by the beam splitter and are incident on the reflection portion, and
a reflected light reflected by the user's eye is reflected or transmits through the beam splitter and is incident on the imaging portion.

7. The image projection device according to claim 6, comprising an aperture member provided on a reflective surface of the reflection portion or between the reflection portion and the optical member, having an opening, wherein the opening allows the light beam and the reflected light to pass through, and having a property of allowing the light beam to transmit through and not allowing the reflected light to transmit through at portions other than the opening.

8. The image projection device according to claim 6 or 7, wherein the scanning portion and the first convergence point are in a conjugate relationship, and the imaging portion and the first convergence point are in a conjugate relationship.

9. A method for manufacturing an image projection device, comprising:
a step of preparing an image projection device having a projection portion and a imaging portion, the projection portion comprising: a light source; a scanning portion, scanning light beams emitted from the light source; and a projection optical system, converging a plurality of the light beams emitted from the scanning portion in different directions by being scanned by the scanning portion to a convergence point inside a user's eye and then projecting the light beams onto a retina to project an image on the retina, and the imaging portion capturing an image of the user's eye;
a step of emitting the plurality of light beams from the image projection device, moving a component provided in the projection portion capable of moving the convergence point to move the convergence point to a plurality of positions, and capturing the plurality of light beams at the convergence point at each of the plurality of positions using the imaging portion; and
a step of obtaining control information that associates a plurality of points in an image captured by the imaging portion with control values that controlled movement of the component when the convergence point is positioned at each of the plurality of points, from captured images in which the imaging portion captured the plurality of light beams at the convergence point.

10. The method for manufacturing the image projection device according to claim 9, wherein the capturing step captures the plurality of light beams irradiated onto a screen disposed at a position of the convergence point.

11. The method for manufacturing the image projection device according to claim9 or 10, comprising a step of storing the control information in a memory portion provided in the image projection device.

12. The method for manufacturing the image projection device according to claim 11, wherein different control information is stored in the memory portion for each different image projection device.

13. The image projection device according to claims 3, 4, or 5, wherein the position control portion obtains the control value corresponding to a position of the pupil in the captured image from the control information and moves the component using the control value obtained to align a position of the first convergence point with the pupil.
